# EUROPÄISCHE PATENTSCHRIFT

(11) **EP 1 558 699 B1**
(45) Veröffentlichungstag und Bekanntmachung des Hinweises auf die Patenterteilung: **05.04.2006**
(21) Anmeldenummer: 03775262.3
(22) Anmeldetag: 30.10.2003
(51) Int. Cl.: C09K 19/38

(54) **POLYMERISIERBARE MISCHUNGEN**
POLYMERISABLE MIXTURES
MELANGES POLYMERISABLES

(30) Priorität: 07.11.2002 DE 10251861
(43) Veröffentlichungstag der Anmeldung: 03.08.2005
(73) Patentinhaber: Consortium für elektrochemische Industrie GmbH, 81379 München (DE)
(72) Erfinder: HANELT, Eckhard, 82269 Geltendorf (DE); GEBHARD, Thilo, 81371 München (DE); JANDKE, Markus, 84508 Burgkirchen (DE)
(74) Vertreter: Fritz, Helmut
(86) Internationale Anmeldenummer: PCT/EP2003/012083
(87) Internationale Veröffentlichungsnummer: WO 2004/041966

(56) Entgegenhaltungen:
- EP-A- 0 617 111
- EP-A- 0 643 121
- EP-A- 1 046 692
- EP-A- 1 059 282
- WO-A-96/25470
- WO-A-97/23580
- WO-A-98/04651
- DE-A- 19 619 460
- DE-A- 19 917 067
- DE-A- 19 922 158

## Beschreibung

Die Erfindung betrifft polymerisierbare Mischungen und daraus herstellbare optisch anisotrope Polymere.

Niedermolekulare nematische oder smektische Verbindungen können im Temperaturbereich der flüssigkristallinen Phase in dünnen Schichten gut orientiert werden und besitzen dann eine optische Anisotropie, mit der polarisiertes Licht kontrolliert beeinflußt werden kann. Technisch wird dieser Effekt zum Beispiel in Flüssigkristallanzeigen (LCDs) ausgenutzt, in denen die Helligkeit einzelner Pixel verändert wird, indem die Orientierung der Moleküle durch Anlegen eines elektrischen Feldes umgeschaltet wird. Durch geeignete Wahl von Verbindungen mit hoher Brechungsindexanisotropie Δn können bei Schichtdicken von wenigen µm optische Verzögerungen in der Größenordnung der Wellenlängen des sichtbaren Lichts erreicht werden. Die optische Anisotropie dieser Schichten aus niedermolekularen flüssigkristallinen Verbindungen ist wegen der thermischen Bewegung der Moleküle und des begrenzten flüssigkristallinen Phasenbereichs jedoch nur in einem sehr eingeschränkten Temperaturbereich stabil. Um dauerhafte Schichten mit einer definierten optischen Anisotropie zu erzeugen, die auch bei einer'Temperaturänderung erhalten bleibt, verwendet man daher flüssigkristalline Verbindungen mit polymerisierbaren Gruppen, die durch eine chemische Reaktion zu einem Polymerfilm vernetzt werden. Besonders bewährt haben sich zu diesem Zweck flüssigkristalline Seitenkettenpolymere, die aus polymerisierbaren nematischen und smektischen Monomeren und Oligomeren, wie sie beispielsweise in WO 96/25470 beschrieben sind, hergestellt werden.
Für viele Anwendungen ist die Höhe der optischen Anisotropie Δn von zentraler Bedeutung. Während bei einer reinen Retarderfunktion die gesamte optische Verzögerung Δn·d außer durch den Materialparameter Δn auch durch die Dicke d einer Schicht eingestellt werden kann, ist dies beispielsweise für die Breite Δλ einer cholesterischen Reflexionsbande nicht mehr möglich, da diese wegen Δλ/λ=Δn/n direkt von der Doppelbrechung Δn abhängt (mit λ = Mittenwellenlänge der cholesterischen Reflexionsbande, n = mittlerer Brechungsindex des Materials). Das Δn des Materials läßt sich zwar in gewissen Grenzen durch eine geeignete. Wahl der chemischen Gruppen der Mesogene variieren, diese Wahl ist unter wirtschaftlichen Gesichtspunkten jedoch stark eingeschränkt. Besonders Verbindungen mit hohem Δn wie zum Beispiel Tolane erfordern aufwendige Synthesen und sind wegen der zu hohen Kosten für Anwendungen mit hohem Materialbedarf kaum geeignet.

Die optische Anisotropie einer Flüssigkristallschicht wird sowohl durch die Polarisierbarkeit der einzelnen Moleküle im Frequenzbereich des sichtbaren Lichts als auch durch den temperaturabhängigen Ordnungsparameter des Ensembles aller Moleküle bestimmt (W. Maier, A. Saupe, Z. Naturforsch., Teil A 14, 882 (1959); ibid. 15, 287 (1960)). Bei der Polymerisation der Flüssigkristallschicht kann es zu einer Änderung der optischen Anisotropie kommen. Da sich die chemischen Strukturen der Mesogene vor und nach der Polymerisation kaum unterscheiden, kann davon ausgegangen werden, daß auch die optische Polarisierbarkeit in beiden Fällen ähnlich ist. Für die Veränderung der optischen Anisotropie ist hauptsächlich der Ordnungsparameter verantwortlich. Um eine Reduzierung des Ordnungsparameters beim Polymerisieren zu vermeiden, werden in den bisher bekannten flüssigkristallinen Mischungen zur Herstellung optisch anisotroper Polymerfilme daher meistens Verbindungen eingesetzt, bei denen die polymerisierbaren Gruppen durch einen Alkylspacer vom mesogenen Rumpf des Moleküls entkoppelt werden.

Besonders geeignete Flüssigkristalle sind die in WO 96/25470 beschriebenen Mischungen, die flüssigkristalline Monomere oder Oligomere mit genau einer polymerisierbaren Gruppe enthalten und die zur Erhöhung der Vernetzungsdichte und damit der Stabilität des Films noch zusätzliche Komponenten besitzen, die mindestens zwei polymerisierbare Gruppen tragen. Die polymerisierbaren Gruppen sind im Allgemeinen nicht mesogen und stören die Ordnung der flüssigkristallinen Phase. Daher sind in solchen Mischungen flüssigkristalline Verbindungen mit nur einer polymerisierbaren Gruppe solchen mit zwei polymerisierbaren Gruppen vorzuziehen, wenn das Ziel ein Polymerfilm mit einer möglichst hohen optischen Anisotropie ist.
Für die Polymerfilme muß weiterhin gewährleistet sein, daß die optische Anisotropie der orientierten aber noch nicht polymerisierten flüssigkristallinen Mischung auch nach der Polymerisationsreaktion erhalten bleibt. Man stellt jedoch fest, daß die nach WO 96/25470 hergestellten Polymerfilme im Gegensatz zu früheren Untersuchungen mit flüssigkristallinen Monomeren, die zwei polymerisierbare Gruppen tragen (D.J. Broer, G.N. Mol, Makromol. Chem. 192, 59 (1991)) oft eine geringere optische Anisotropie besitzen als die orientierten Schichten aus dem selben Material vor der Polymerisationsreaktion.

Im Stand der Technik sind polymerisierbare flüssigkristalline Mischungen bekannt, die nichtpolymerisierbare flüssigkristalline Komponenten enthalten, die aber nach der Polymerisation keinen homogenen Polymerfilm ergeben.
Insbesondere sind diese Filme für Anwendungen, für die ein hohes Δn erforderlich ist, nicht oder nur bedingt geeignet. In EP 451905 A werden anisotrope Gele beschrieben, die aus Mischungen von polymerisierbaren Komponenten mit niedermolekularen, flüssigkristallinen Materialien hergestellt werden. Kennzeichen dieser Gele ist, daß das niedermolekulare, flüssigkristalline Material eine kontinuierliche Phase um das Polymernetzwerk bildet. In diesen polymerstabilisierten flüssigkristallinen Gelen sind die niedermolekularen, flüssigkristallinen Komponenten noch beweglich und können durch Einwirken einer äußeren Kraft, z.B. ein elektrisches Feld, geschaltet werden. Sie besitzen jedoch keine thermische und mechanische Stabilität und sind daher als stabiler optisch anisotroper Polymerfilm nicht geeignet.

In US 6,181,395 B1 wird ein Film beschrieben, der als breitbandiger Zirkularpolarisator Verwendung findet. Durch Segregation einer nichtpolymerisierbaren flüssigkristallinen Komponente in einem polymerisierbaren cholesterischen Material soll ein nichtlinearer Gradient der Zusammensetzung senkrecht zur Filmoberfläche erzeugt werden, d.h. die Filme sind nicht homogen. Über die mechanische Stabilität und die optische Anisotropie der Filme wird nichts ausgesagt. Außer den gegebenen speziellen Beispielen ist keine allgemeingültige Vorschrift angegeben, wie das LC-Material ausgewählt werden muß, um den in US 6,181,395 B1 beschriebenen Effekt einer nichtlinearen Ganghöhenvariation der cholesterischen Reflexionsbande zu erreichen. Die daraus resultierende starke Verbreiterung der cholesterischen Reflexionsbande wird unabhängig vom durch die Doppelbrechung Δn theoretisch vorgegebenen Wert Δλ/λ=Δn/n erreicht. Die in den Beispielen verwendeten LC-Mischungen enthalten im Polymeranteil keine aromatischen Doppelringstrukturen und sind nicht geeignet, in den Polymerfilmen eine hohe optische Anisotropie im Sinne dieser Erfindung zu gewährleisten.

Es war die Aufgabe der vorliegenden Erfindung, eine polymerisierbare Mischung bereitzustellen, aus der mit möglichst geringem Syntheseaufwand ein stabiler Polymerfilm mit hoher optischer Anisotropie Δn hergestellt werden kann.

Gegenstand der Erfindung ist eine polymerisierbare Mischung (P) enthaltend
A) Monomer oder Oligomer (A), wobei jedes der Monomere oder Oligomere (A) mindestens zwei polymerisierbare funktionelle Gruppen aufweist, die ausgewählt werden aus (Meth)Acrylatester-, Epoxy- und Vinylethergruppen,
B) flüssigkristallines Monomer oder Oligomer (B), wobei jedes der Monomere oder Oligomere (B) mindestens eine mesogene Gruppe mit aromatischer Doppelringstruktur sowie genau eine polymerisierbare funktionelle Gruppe aufweist, die ausgewählt wird aus (Meth-)Acrylatester-, Epoxy- und Vinylethergruppen,
C) 1 bis weniger als 50 Gew.-%, bezogen auf die polymerisierbare Mischung, eines Monomeren (C), das mindestens eine mesogene Gruppe mit aromatischer Doppelringstruktur aufweist und keine Gruppe enthält, die mit den polymerisierbaren funktionellen Gruppen der Monomeren oder Oligomeren (A) und (B) reagieren kann.

Überraschend zeigen die durch Polymerisation der Mischung (P) hergestellten Polymere, insbesondere Polymerfilme (F) daraus, bis zu 50% höhere optische Anisotropien als Filme aus in der Literatur bekannten Zusammensetzungen, bei denen die flüssigkristallinen Monomere oder Oligomere ähnliche mesogene Gruppen besitzen, die jedoch jeweils mindestens eine polymerisierbare funktionelle Gruppe enthalten oder bei denen die flüssigkristallinen Monomere oder Oligomere keine aromatischen Doppelringstrukturen aufweisen. Die optische Anisotropie Δn ist bevorzugt größer als 0,18 für nematische und bevorzugt größer als 0,16 für cholesterische LC-Polymere und ändert sich bei einer Temperaturänderung von 0°C bis 80°C vorzugsweise weniger als 10%.

Überraschend würde gefunden, daß bereits geringe Zugaben an nichtpolymerisierbaren flüssigkristallinen Komponenten (C) die optische Anisotropie eines aus dieser LC-Mischung hergestellten Polymerfilms (F) bedeutend steigern können. Dies trifft insbesondere auch dann zu, wenn die mesogenen Gruppen dieser Komponenten (C) ähnliche chemische Strukturen und damit ähnliche optische Polarisierbarkeiten besitzen wie die polymerisierbaren Mischungskomponenten. Dabei bildet die Mischung (P) vorzugsweise eine homogene Phase. Die Ordnung dieser homogenen Phase ist vorzugsweise nematisch, cholesterisch oder smektisch. Im fertigen Polymerfilm (F) stellen die nichtpolymerisierten flüssigkristallinen Komponenten vorzugsweise keine eigene kontinuierliche Phase dar, sondern sind vorzugsweise homogen im Netzwerk verteilt, um die Homogenität und die mechanische Stabilität des Polymerfilms (F) zu gewährleisten. Daher beträgt der Anteil der nichtpolymerisierbaren flüssigkristallinen Monomeren (C) in der Mischung unter 50%. Nichtpolymerisierbare Gruppen im Sinne dieser Erfindung können auch funktionelle Gruppen wie die Allylgruppe sein, die wegen ihrer Reaktionsträgheit beispielsweise in einer Mischung mit (Meth-)Acrylatester-, Epoxy- oder Vinylether-Gruppen bei einer Copolymerisation nicht oder nur wenig mitreagieren. Vorzugsweise enthalten die Monomeren (C) in der polymerisierbaren Mischung (P) keine (Meth-) Acrylatester-, Epoxy-, Vinylether-, Thiol-, oder andere Gruppen, die bei der Polymerisation oder Copolymerisation mitreagieren.
Dagegen gibt es andere flüssigkristalline Verbindungen wie zum Beispiel die in WO 96/25470 beschriebenen Thiolverbindungen, die als Monomere der Gruppe (C) nicht geeignet sind, da sie mit den (Meth-)Acrylatester-, Epoxy- und Vinylether-Gruppen reagieren. In WO 96/25470 werden diese flüssigkristallinen Thiolverbindungen zur Terminierung der radikalischen Polymerisation und damit zur Regelung der Länge der Polymerketten verwendet.

Als mesogene Gruppen im Sinne dieser Erfindung werden diejenigen chemischen Gruppen bezeichnet, die in einem Molekül flüssigkristalline Eigenschaften hervorrufen können.
Prinzipiell sind alle in der Literatur bekannten mesogenen Gruppen für die Komponenten (A), (B) und (C) geeignet. Eine regelmäßig aktualisierte Sammlung bekannter mesogener Gruppen wird von V. Vill et al. als Datenbank unter der Bezeichnung LiqCryst herausgegeben (zu beziehen bei LCI Publisher GmbH, Eichenstr. 3, D-20259 Hamburg). Bevorzugt werden solche mesogenen Gruppen verwendet, die in einem industriellen Maßstab synthetisch leicht zugänglich sind und die Verbindungen ergeben, die eine für die Anwendung als Polymerfilm (F) ausreichende Stabilität über einen langen Zeitraum gewährleisten. Beispiele dafür sind chemische Strukturelemente wie Carbonsäureester und Alkohole basierend auf Phenyl-, Biphenyl-, Cyanobiphenyl-, Naphtyl- und Cyanonaphtylderivaten sowie Kombinationen aus diesen Gruppen.

Aromatische Doppelringstrukturen im Sinne dieser Erfindung sind zwei monocyclische aromatische Gruppen, welche durch eine Einfachbindung direkt verbunden sind oder bicyclische aromatische Gruppen. Bevorzugte aromatische Doppelringstrukturen sind je zwei durch eine Einfachbindung verbundene monocyclische Gruppen, die ausgewählt werden aus 1,4-Phenylen, 2,5-Pyridinylen und 2,5-Pyrenylen und die aromatischen Doppelringe 2,6-Naphthyliden, 2,7-Naphthyliden und 1,4-Naphthyliden, wobei diese aromatischen Doppelringstrukturen auch substituiert sein können.

Vorzugsweise weisen die Monomere oder Oligomere (A) mindestens eine mesogene Gruppe und mindestens zwei polymerisierbare funktionelle Gruppen auf, die ausgewählt werden aus (Meth)Acrylatester, Epoxy und Vinylether.

Bevorzugte Oligomere (A) und (B) weisen ein Polymerrückgrat und mesogene Seitengruppen auf.

Besonders bevorzugte Oligomere (A) und (B) sind solche, die mindestens zwei gleiche oder verschiedene Einheiten der allgemeinen Formel (1)

[MR¹ ₚSiO_{q/2}] (1)

enthalten, in denen unabhängig voneinander jeweils entweder p=1 und q=2 oder p=2 und q=1 ist,
- **R**^{**1**}: gleiche oder verschiedene C₁- bis C₁₀-Kohlenwasserstoffreste bedeutet, wie der Methyl-, Ethyl-, n-Propyl-, n-Butyl-, n-Pentyl-, n-Hexyl-, n-Heptyl-, n-Octyl-, n-Nonyl-, und n-Decylrest oder der Phenylrest,
- **M**: gleiche oder verschiedene mesogene Seitengruppen der allgemeinen Formel (2)

R²-X¹-(A²-X²)ₐ-R³-A¹ (2)
sind, wobei
- **R**^{**2**}: einen Rest der Formel (CH₂)ₙ bedeutet, in dem n eine ganze Zahl im Wert von 2 bis 10 ist, wobei eine oder mehrere, einander nicht benachbarte Methyleneinheiten durch Sauerstoffatome oder Dimethylsilylreste ersetzt sein können,
- **R**^{**3**}: eine chemische Bindung oder einen Rest der Formel (CH₂)ₘ bedeutet, in dem m eine ganze Zahl im Wert von 1 bis 13 ist,'wobei eine oder mehrere, einander nicht benachbarte Methyleneinheiten durch Sauerstoffatome oder Dimethylsilylreste ersetzt sein können,
- **X**^{**1**}: eine chemische Bindung ist oder ausgewählt wird aus zweibindigen Resten der Gruppe -O-, -COO- und -OCO-,
- **X**^{**2**}: gleiche oder verschiedene Bindungsgruppen bedeutet, die unabhängig voneinander ausgewählt werden aus der Gruppe der chemischen Bindung und zweibindigen Resten der Gruppe -COO-, -OCO-, -CH₂CH₂-, -CH=N-, -N=CH-, -N=N-, -CONH-, -HONC-, -C≡C-, -CH=CH-, -N=N(O)- und -N(O)=N-,
- **A**^{**2**}: gleiche oder verschiedene monocyclische Gruppen bedeutet, die unabhängig voneinander ausgewählt werden aus zweibindigen Resten der Gruppe 1,4-Phenylen, 1,4-Cyclohexylen, 2,5-Pyridinylen, 2,5-Pyrenylen, 2,5-Pyrimidinylen, 5,2-Pyrimidinylen, 2,5-Dioxanylen, 5,2-Dioxanylen, und den aromatischen Doppelringen 2,6-Naphthyliden, 2,7-Naphthyliden und 1,4-Naphthyliden, wobei diese Reste auch substituiert sein können,
- **A**^{**1**}: eine Endgruppe bedeutet, die ausgewählt wird aus der Gruppe der Wasserstoffatome, Halogenatome, Hydroxyl-, Nitril-, Cyano-, Acryloyloxy-, (Meth)acryloyl-, (Meth)acrylethylen-oxyreste, Epoxy, Vinylether, Cholestanreste, Cholesterylreste, Doristerylreste, Dianhydrohexitreste, Tartratreste, Phenyl-, Cyclohexanreste und der Alkenylreste mit 1 bis 10 Kohlenstoffatomen, in denen eine oder mehrere, einander nicht benachbarte Methyleneinheiten durch Sauerstoffatome oder Dimethylsilylreste ersetzt sein können und
- **a**: die Werte 2, 3 oder 4 annehmen kann.

Besonders bevorzugte siliziumhaltige Oligomere aus Einheiten der allgemeinen Formel (1) sind Cyclotetrasiloxan, Cyclopentasiloxan, Tetramethyldisiloxan und substituierte lineare Polymethylsiloxane mit bevorzugter Anzahl der Siliziumatome von 4 bis 20 und vorzugsweise Trimethylsilylgruppen als Endgruppen.

Besonders bevorzugt als Reste **R**^{**1**} sind Methylreste.

Besonders bevorzugte mesogene Seitengruppen der Oligomere (A) und (B) sind diejenigen der allgemeinen Formel (3), 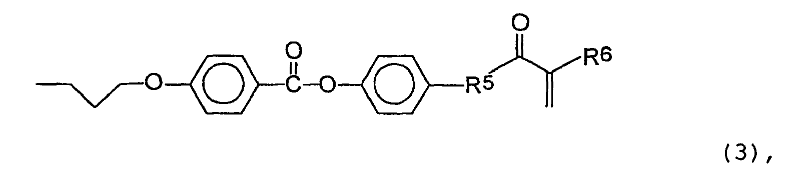 in der
- **R**^{**5**}: ein Sauerstoffatom oder einen Oxyalkylenoxyrest mit 1- bis 11-Kohlenstoffatomen, in dem eine oder mehrere, nicht miteinander oder mit Sauerstoff benachbarte Methyleneinheiten durch Sauerstoffatome ersetzt sein können und
- **R**^{**6**}: ein Wasserstoffatom oder einen Methylrest bedeuten.

Besonders bevorzugte Monomere (A) sind Verbindungen der allgemeinen Formel (4)

R⁷-X¹-R³-(A²-X²)_{b}-A²-R³-X¹-R⁷ (4),

wobei **R**^{**3**}, **X**^{**1**}, **X**^{**2**}, **A**^{**1**} und **A**² die für die allgemeine Formel (2) angegebenen Bedeutungen haben und
- **R**^{**7**}: ausgewählt wird aus gleichen oder verschiedenen Resten der Gruppe der Acryloyloxy-, (Meth)acryloyloxy-, (Meth)-acrylethylenoxyreste, Epoxy und Vinylether und
- **b**: die Werte 1, 2 oder 3 annehmen kann.

Besonders bevorzugte Monomere (B) sind Verbindungen der allgemeinen Formel (5)

R⁸-X¹-R³-(A²-X²)ₐ-A¹ (5),

wobei **R**^{**3**}, **X**^{**1**}, **X**^{**2**}, **A**^{**1**}, **A**^{**2**} und a die für die allgemeine Formel (2) angegebenen Bedeutungen haben und
- **R**^{**8**}: ausgewählt wird aus der Gruppe der Acryloyloxy-, (Meth)acryloyloxy-, (Meth)acrylethylenoxyreste, Epoxy und Vinylether und der Gruppe der Alkylreste oder Alkenylreste mit 1 bis 10 Kohlenstoffatomen, in denen eine oder mehrere, einander nicht benachbarte Methyleneinheiten durch Sauerstoffatome oder Dimethylsilylreste ersetzt sein können.

Vorzugsweise enthält die polymerisierbare Mischung (P) mindestens 5, insbesondere mindestens 10 Gew.-% und höchstens 95, insbesondere höchstens 80 Gew.-% Monomer oder Oligomer (A).

Vorzugsweise enthält die polymerisierbare Mischung (P) mindestens 5, insbesondere mindestens 10 Gew.-% und höchstens 95, insbesondere höchstens 80 Gew.-% flüssigkristallines Monomer oder Oligomer (B).

Besonders bevorzugte flüssigkristalline Monomere (C) sind Verbindungen der allgemeinen Formel (6)

R⁹-X¹-(A²-X²)ₐ-A³ (6)

wobei **R**^{**3**}, **X**^{**1**}, **X**^{**2**}, **A**^{**2**} und a die für die allgemeinen Formeln (1) und (2) angegebenen Bedeutungen haben und
- **R**^{**9**}: einen Carboxylrest oder einen Alkyl - oder Alkenylrest mit 1 bis 10 Kohlenstoffatomen bedeutet, in denen eine oder mehrere, einander nicht benachbarte Methyleneinheiten durch Sauerstoffatome oder Dimethylsilylreste ersetzt sein können und
- **A**^{**3**}: ausgewählt wird aus der Gruppe der Wasserstoffatome, Halogenatome, Hydroxyl-, Nitril-, Cyano-, Cholestanreste, Cholesterylreste, Doristerylreste, Dianhydrohexitreste, Tartratreste, Phenyl, Cyclohexanreste und der Alkenylreste mit 1 bis 10 Kohlenstoffatomen, in denen eine oder mehrere, einander nicht benachbarte Methyleneinheiten durch Sauerstoffatome oder Dimethylsilylreste ersetzt sein können.

Vorzugsweise enthält die polymerisierbare Mischung (P) mindestens 5, insbesondere mindestens 10 Gew.-% und höchstens 40, insbesondere höchstens 35 Gew.-% Monomer (C).

Die polymerisierbaren Mischungen (P) können gegebenenfalls chirale Komponenten (D) enthalten, die polymerisierbare funktionelle Gruppe aufweisen oder nicht. Besonders bevorzugte chirale Komponenten (D) sind Verbindungen der allgemeinen Formel (7):

A⁵-R¹¹-A⁴-(X⁴-A⁴)_{c}-X³-R¹⁰-K¹-R¹²-X⁵-(A⁶-X⁶)_{d}-A⁶-R¹³-A⁷ (7),

wobei
- **K**^{**1**}: ausgewählt wird aus der Gruppe der Dianhydrohexit-Derivate und Tartratreste und insbesondere Dianhydrosorbid oder Dianhydromannit,
- **R**^{**10**}, **R**^{**11**}, **R**^{**12**} und **R**^{**13**}: unabhängig voneinander dieselbe Bedeutung wie **R**^{**3**} haben,
- **X**^{**3**} und **X**^{**5**}: unabhängig voneinander dieselbe Bedeutung wie x¹ haben,
- **X**^{**4**} und **X**^{**6**}: unabhängig voneinander dieselbe Bedeutung wie X² haben,
- **A**^{**4**} und **A**^{**6**}: unabhängig voneinander dieselbe Bedeutung wie A² haben,
- **A**^{**5**} und **A**^{**7**}: gleiche oder verschiedene Reste bedeuten, die ausgewählt sind aus der Gruppe der Wasserstoffatome, Halogenatome, Hydroxyl-, Nitril-, Cyano-, Acryloyloxy-, (Meth)acryloyloxy-, (Meth)acrylethylenoxyreste, Epoxy, Vinylether, Phenyl-, Cyclohexanreste und der Alkenylreste mit 1 bis 10 Kohlenstoffatomen, wobei eine oder mehrere, einander nicht benachbarte Methyleneinheiten durch Sauerstoffatome oder Dimethylsilylreste ersetzt sein können,
und **b**, **c** unabhängig voneinander die Werte 0, 1 oder 2 annehmen können.

In einer cholesterischen Mischung enthält die polymerisierbare Mischung (P) abhängig von der HTP (helical twisting power) der chiralen Komponente und der angestrebten Reflexionswellenlänge vorzugsweise mindestens 0,1, und höchstens 50, insbesondere höchstens 20 Gew.-% chirale Komponente "(D)".

Es kann sich bei den Komponenten (A), (B), (C) und (D) jeweils um eine Verbindung oder um ein Gemisch von Verbindungen handeln.

Die polymerisierbaren Mischungen (P) können gegebenenfalls weitere Additive (E) enthalten, die ausgewählt werden aus der Gruppe der Initiatoren, Inhibitoren, Beschleuniger, Farbstoffe, Haftvermittler und oberflächenaktiven Substanzen in Gewichtsanteilen, die die Ausbildung einer flüssigkristallinen Phase nicht behindern.

Vorzugsweise enthält die polymerisierbare Mischung (P) mindestens 0,01 und höchstens 10, insbesondere höchstens 5 Gew.-% Additive (E).
Die Herstellung flüssigkristalliner Monomere und Oligomere ist in der Literatur beschrieben.
Verschiedene kontinuierliche oder diskontinuierliche Verfahren zur Herstellung von optisch anisotropen Polymeren (F) und insbesondere von optisch anisotropen Polymerfilmen (F) aus den polymerisierbaren Mischungen (P) sind ebenfalls prinzipiell bekannt. Dabei wird die polymerisierbare Mischung (P) auf ein Substrat aufgetragen, orientiert und anschließend durch eine chemische Reaktion, insbesondere Polymerisation fixiert. Vorzugsweise wird im Temperaturbereich der flüssigkristallinen Phase der polymerisierbaren Mischung (P) orientiert.

Das Auftragen der polymerisierbaren Mischungen (P) auf die Substratoberfläche kann in Lösung oder als lösungsmittelfreie Schmelze oberhalb des Glaspunkts der Mischung, beispielsweise durch Spincoating, mit einer Rakel oder einer Walze, durchgeführt werden. Falls zum Auftragen ein Lösungsmittel verwendet wird, muß dieses in einem nachfolgenden Trocknungsschritt entfernt werden. Die Dicke der trockenen LC-Schicht auf dem Substrat hängt von den Anforderungen der jeweiligen Anwendung ab. Soll der Polymerfilm (F) beispielsweise als Verzögerungsplatte verwendet werden, dann ist die notwendige Dicke der Quotient aus geforderter optischer Verzögerung und optischer Anisotropie der orientierten LC-Schicht. Bei cholesterischen LC-Polymeren, bei denen die polymerisierbare Mischung (P) eine chirale Komponente enthält, bestimmt die Schichtdicke die Anzahl der Ganghöhen der cholesterischen Helix und damit die Form der Reflexionsbande. Vorzugsweise beträgt die Dicke der trockenen Polymerfilme (F) 0,5 µm bis 500 µm, besonders bevorzugt 1 µm bis 50 µm. Im Fall von cholesterischen Polymerfilmen (F) beträgt die Schichtdicke besonders bevorzugt mehr als die dreifache Ganghöhe der cholesterischen Helix.
Der Polymerfilm (F) kann auf einem Substrat als einseitig offene Schicht präpariert werden oder durch ein zweites Substrat abgedeckt werden. Die Präparation einseitig offener Polymerfilme (F) im Schmelzauftrag und aus einer Lösung sind beispielsweise in EP 358208 A und EP 617111 A beschrieben. Verschiedene Verfahren zur kontinuierlichen und diskontinuierlichen Herstellung von LC-Polymerfilmen zwischen zwei Substraten sind beispielsweise in EP 601483 A und EP 631157 A beschrieben. Zur Verbesserung der Benetzung des Substrats oder der Orientierung der Mesogene an der offenen Oberfläche können die polymerisierbaren Mischungen (P) wie in EP 617111 A gezeigt in geringen Gewichtsanteilen als Additive (E) oberflächenaktive Substanzen enthalten, wie sie beispielsweise zur Verlaufsverbesserung aus der Lackherstellung bekannt sind. Besonders geeignete oberflächenaktive Substanzen sind Organosiloxane, die beispielsweise von der Wacker-Chemie GmbH als Lackhilfsmittel käuflich erhältlich sind. Die Organosiloxane können als Oligomere auch selbst flüssigkristalline Eigenschaften haben. Wenn der Polymerfilm (F) nach dem Vernetzen auf dem Substrat verbleiben soll, kann die Haftung auf dem Substrat abhängig von der Beschaffenheit der Substratoberfläche durch geeignete Haftvermittler in der polymerisierbaren Mischung (P) verbessert werden, die ebenfalls Stand der Technik sind. Eine Verbesserung der Haftung des Polymerfilms (F) auf dem Substrat kann auch durch eine geeignete Vorbehandlung des Substrats, beispielsweise eine Coronabehandlung, erreicht werden. Die Additive (E), die selbst keine flüssigkristallinen Eigenschaften besitzen, werden nur in so geringer Menge zugesetzt, daß sie die Ausbildung der flüssigkristallinen Phase nicht beeinträchtigen.
Die Orientierung der Mesogene in der polymerisierbaren Mischung (P) erfolgt beispielsweise durch die Scherung des Materials beim Auftragen oder beim Aufbringen des zweiten Substrats oder beispielsweise nach dem Auftragen durch die Wechselwirkung der Mesogene mit der bzw. den entsprechend ausgewählten Substratoberflächen oder durch ein elektrisches oder magnetisches Feld. Dies geschieht vorzugsweise in einem Temperaturbereich von oberhalb des Glaspunktes oder Schmelzpunkts bis unterhalb des Klärbeginns der jeweiligen polymerisierbaren Mischungen (P). Um einen einfachen technischen Prozeß zu ermöglichen, wird die Zusammensetzung der polymerisierbaren Mischungen (P) vorzugsweise so abgestimmt, daß die optimale Orientierungstemperatur 20°C bis 150°C beträgt.
Wenn die Orientierung der Mesogene durch eine Wechselwirkung mit der bzw. den Substratoberflächen erfolgen soll, dann kann zur Verbesserung der orientierenden Wirkung eine geeignete Orientierungsschicht durch bekannte, in der Literatur beschriebene Coating-, Druck- oder Tauchverfahren auf das Substrat oder die Substratoberflächen aufgebracht werden. Die Orientierungsschichten oder die Substrate können durch zusätzliche Behandlung, z.B. Reiben, eine die Orientierung begünstigende Oberflächenstruktur erhalten. Eine ortsabhängige Veränderung der Orientierungsrichtung ist beispielsweise durch bekannte Verfahren zur Strukturierung einer Orientierungsschicht im µm- bis mm-Bereich mittels Belichtung mit polarisiertem UV-Licht durch eine Maske möglich. Geeignete Verfahren zum Erreichen einer Neigung zwischen den Mesogenen einer flüssigkristallinen Phase und ihren Grenzflächen sind ebenfalls in der Literatur beschrieben, beispielsweise die Belichtung mit polarisiertem UV-Licht oder das Aufdampfen anorganischer Materialien unter einem schrägen Winkel.
Wenn der aus der polymerisierbaren Mischung (P) hergestellte Polymerfilm (F) nach der Herstellung auf dem Substrat verbleibt, dann sind als Substrate bevorzugt solche Materialien geeignet, die zur Herstellung von optischen Elementen bekannt sind. Besonders bevorzugt sind Substrate, die im für die jeweilige Anwendung relevanten Wellenlängenbereich transparent oder semitransparent sind, wie viele organische oder anorganische Substrate, oder metallische Substrate, die das Licht reflektieren. Diese Einschränkung entfällt, wenn der Polymerfilm (F) nach der Herstellung vom Substrat abgelöst wird. In diesem Fall werden solche Substrate besonders bevorzugt, die nur eine geringe Haftung auf der Oberfläche vermitteln. Die Substrate können eben oder gekrümmt sein. Besonders bevorzugt werden Substrate verwendet, die bei der Temperatur der Herstellung, Verarbeitung und Anwendung des Polymerfilms (F) mechanisch stabil sind.
Ganz besonders bevorzugt sind Glas- oder Quarzplatten, Polymerfilme, wie beispielsweise Polycarbonate, Polysulfone, Polyalkylenterephthalate, Polyalkylennaphthalate oder Polyimide und polierte Metalloberflächen. Bei Bedarf können das oder die Substrate mit einer zusätzlichen Orientierungshilfe beispielsweise einer Schicht aus Polyimid, Polyamid, Polyvinylalkohol oder einem Siliciumoxid versehen sein.

Nach erfolgter Orientierung wird die polymerisierbare Mischung (P) polymerisiert oder copolymerisiert. Dabei werden die Mischungskomponenten, die polymerisierbare funktionelle Gruppen ausgewählt aus der Gruppe bestehend aus (Meth-)Acrylatester, Epoxy und Vinylether aufweisen, dreidimensional vernetzt. Diese Vernetzung wird vorzugsweise mittels freier Radikale bewirkt, welche durch Peroxide, durch UV-Licht oder durch energiereiche elektromagnetische Strahlung oder thermisch erzeugt werden. Die Vernetzung kann aber auch mittels direkt an Silicium gebundene Wasserstoffatome enthaltende Vernetzer unter Katalyse durch Platinmetallkatalysatoren bewirkt werden oder sie kann auch kationisch oder anionisch erfolgen. Besonders bevorzugt ist die Vernetzung durch UV-Licht, die in EP 358208 A beschrieben ist. Der resultierende Polymerfilm kann zusammen mit dem Substrat in Form eines Laminats, als einseitig offener Film oder nach Entfernen des oder der Substrate auch als freier Film verwendet werden.
Eine bevorzugte Anwendungsform der resultierenden optisch anisotropen Polymerfilme (F) sind optisch anisotrope Plättchen, die im folgenden Text auch als LC-Plättchen bezeichnet werden. Diese optisch anisotrope Plättchen können hergestellt werden durch Zerkleinern von Polymerfilmen (F). In EP 601483 A ist beschrieben, wie Pigmente mit flüssigkristalliner Struktur mit chiraler Phase, die farbiges Licht reflektieren, durch Ablösen eines polymerisierten cholesterischen Films vom Substrat und anschließendes Zerkleinern der so gewonnenen Rohschollen hergestellt werden können. Danach können die Pigmente in ein geeignetes Bindemittelsystem eingearbeitet und auf ein Substrat aufgebracht werden. In DE 196 19 460 A ist beschrieben, wie Plättchen mit für sichtbares Licht negativer Brechungsindexanisotropie durch ein ähnliches Verfahren hergestellt und verwendet werden können. Ebenso können auch die Polymerfilme (F) in optisch anisotrope Plättchen zerkleinert und anschließend in einem Bindemittel auf ein Substrat aufgetragen werden.
Die Polymerfilme (F) mit hoher optischer Anisotropie können beispielsweise, wie in der Literatur beschrieben, angewendet werden als optische Retarderfilme zur Verbesserung der Eigenschaften von Flüssigkristallanzeigen. Abhängig von der Wahl der Substrate und der Orientierungsschichten sowie der Zusammensetzung der polymerisierbaren Mischungen (P) können unterschiedliche Formen der Orientierung erreicht werden, die in Flüssigkristallanzeigen wie beispielsweise TN - oder STN - Displays vorteilhaft eingesetzt werden können. Beispiele möglicher Orientierungen der Mesogene in den Polymerfilmen (F) sind eine homogene und planare Ausrichtung aller Mesogene, eine Hybridorientierung, bei der die Ausrichtung von einer Oberfläche zur gegenüberliegenden kontinuierlich von planar zu homöotrop wechselt, eine vollständig homöotrope Ausrichtung aller Mesogene oder eine um die Flächennormale verdrillte planare Orientierung, bei der die Mesogene beispielsweise durch Dotieren mit einem Chiralikum oder durch gegeneinander verdrehte Orientierungschichten ähnlich wie in einer TN- oder STN-Zelle orientiert sind.
Durch geringfügige Abwandlung des oben beschriebenen Prozesses zur Herstellung der optisch anisotropen Polymerfilme (F) lassen sich weitere Anwendungen verwirklichen. Beispielsweise können absorptive Polarisationsfilter hergestellt werden, wenn eine polymerisierbare Mischung (P) verwendet wird, die zusätzlich zu den Mischungskomponenten mit polymerisierbaren funktionellen Gruppen und den Monomeren, die bei der Polymerisation oder Copolymerisation nicht mitreagieren, auch dichroitische Farbstoffmoleküle mit anisotropem Absorptionsverhalten enthält, die sich entlang der Mesogene ausrichten. Dabei zeichnen sich die Polymerfilme (F) dadurch aus, daß sie wegen ihres höheren Ordnungsparameters ein verbessertes Kontrastverhältnis zwischen den beiden Polarisationszuständen des Lichts ermöglichen. Digitale oder auch analoge optische Speichermedien, die auf einer lokalen Änderung des Brechungsindex beruhen, lassen sich herstellen, indem die Orientierung der mesogenen Gruppen vor dem Vernetzen lokal verändert wird. Dies kann beispielsweise durch lokale UV-Vernetzung durch eine für UV-Strahlung undurchlässige Maske erreicht werden, wenn zwischen den einzelnen Belichtungsschritten die von außen wirkenden Orientierungskräfte oder die Temperatur der Polymerfilme (F) verändert wird, oder durch lokale Erwärmung der Polymerfilme (F) zum Beispiel durch einen Laser, oder durch lokale Veränderung der HTP des enthaltenen Chiralikums (D) z.B. durch eine UV-induzierte Isomerisierung. Eine andere Möglichkeit ist die Strukturierung der Orientierungsschicht, wie sie beispielsweise bei der LCD-Herstellung zur Erzeugung von sub-Pixeln angewendet wird. Die Polymerfilme (F) sind hier besonders geeignet, da für diese optische Speichermedien eine hohe optische Anisotropie zur Verbesserung des Kontrasts zwischen den eingeschriebenen Informationseinheiten vorteilhaft ist.
Wenn die polymerisierbare Mischung (P) zusätzliche Komponenten enthält, die eine chirale nematische Phase induzieren (Chiralika), dann können die Polymerfilme (F) auch zur Herstellung von polarisations- und wellenlängenselektiven optischen Filtern oder entsprechenden LC-Plättchen verwendet werden. Die Chiralika erzeugen im Nematen entweder eine rechts- oder linkshändig helikale Struktur, die zirkularpolarisiertes Licht mit gleicher Helizität reflektiert. Die zentrale Wellenlänge der Reflexionsbande, die im folgenden als Reflexionswellenlänge λ bezeichnet wird, ist proportional zum Brechungsindex n und zur Ganghöhe der helikalen Struktur, die mit zunehmender Chiralikumskonzentration abnimmt. Zusätzlich ist die Reflexionswellenlänge vom Betrachtungswinkel abhängig. Die relative Breite der Bande Δλ/λ ist durch die relative optische Anisotropie Δn/n des Polymerfilms (F) gegeben. In den meisten aus der Literatur bekannten Fällen liegt Δλ zwischen 5% bis 15% der Reflexionswellenlänge.
Aus der Literatur sind zahlreiche für die polymerisierbare Mischung (P) geeignete Chiralika bekannt. Für linkshelikale Materialien wird oft auf Cholesterinverbindungen zurückgegriffen, die außer der Chiralität auch gute mesogene Eigenschaften mitbringen (siehe z.B. Makromol. Chem. 179, 829-832 (1978)). Es eignen sich z.B. auch die aus US A 4,996,330 und EP 626386 A bekannten Weinsäureimid-Derivate. Ein geeignetes rechtshelikales Steroid-System, das auf Cholest-8(14)-en-3-ol (Doristerol) bzw. dessen Derivaten basiert, ist in EP 664826 A beschrieben. Aus EP 739403 A und EP 749466 A sind vernetzbare, monomere Hexit-Derivate bzw. Mischungen von monomeren Hexit-Derivaten mit anderen flüssigkristallinen Verbindungen bekannt, die als monomere Dotierstoffe zur Herstellung von cholesterischen Netzwerken eingesetzt werden. In US 5,827,449 sind Flüssigkristallmischungen beschrieben, die flüssigkristalline Organosiloxane und Dianhydrohexit-Derivate als links- oder rechtshelikale chirale Zusatzstoffe enthalten. Dabei sind Verbindungen aus der Gruppe Dianhydrosorbid, Dianhydromannit und Dianhydroidit besonders geeignet.
Aus solchen cholesterischen polymerisierbaren Mischungen (P) mit chiralen Zusatzstoffen können nach dem oben beschriebenen Verfahren Polymerfilme (F) und LC-Plättchen hergestellt werden. Ein Vorteil der Polymerfilme (F) mit hoher optischer Anisotropie ist die größere Breite der Reflexionsbande, die zu einer Verstärkung der Reflexion führt. Wenn die Konzentration der Chiralika so gewählt ist, daß die Reflexionswellenlänge der cholesterischen Bande im sichtbaren Wellenlängenbereich liegt, dann sind diese Polymerfilme (F) und LC-Plättchen hervorragend für dekorative Anwendungen geeignet, da aufgrund des blickwinkelabhängigen Farbeindrucks und des metallischen Glanzes besondere Farbeffekte auftreten. Bei Anwendungen im Wertdruck und Markenschutz wird wegen dieser Farbeffekte und der Polarisation des reflektierten Lichts außerdem ein guter Schutz gegen unerlaubtes Kopieren erreicht. Weitere Beispiele für Anwendungen in der Optik sind Filter (EP 302619 A) und optisch abbildende, wellenlängen- und polarisationsselektive Elemente.für sichtbares Licht bis zum nahen UV (EP 631157 A). Mögliche Anwendungsformen dieser optischen Elemente sind beispielsweise Strahlteiler, Spiegel und Linsen.
Bei geringer Konzentration der Chiralika eignen sich die Polymerfilme (F) besonders bevorzugt zur Herstellung von cholesterischen Filtern, die zirkularpolarisiertes Licht im infraroten Bereich (IR) reflektieren. Durch Verwendung gekrümmter Substrate wird so insbesondere die Herstellung optisch abbildender, wellenlängen - und polarisationsselektiver Elemente im IR-Bereich ermöglicht. Für viele Anwendungen besonders bevorzugt sind solche IR-reflektierenden Polymerfilme (F) und LC-Plättchen, die im Bereich des sichtbaren Lichts transparent und farblos sind. Dazu liegt die Wellenlänge der unteren Bandkante bevorzugt über 750 nm. Eine Anwendung dieser IR-Schichten sind beispielsweise maschinenlesbare, für das menschliche Auge unsichtbare Beschriftungen oder Markierungen, beispielsweise Sicherheitsmarkierungen auf Wertdrucken oder im Markenschutz. Bei diesen Anwendungen ist insbesondere die Zirkularpolarisation der reflektierten IR-Strahlung vorteilhaft, da diese _eine Sicherheitsmerkmal, ist, das nur schwierig nachgestellt werden kann. Eine andere Anwendung der IR-reflektierenden Polymerfilme (F) und LC-Plättchen sind farblose und transparente Schutzschichten gegen Wärmestrahlung, beispielsweise Wärmeschutzverglasungen von Gebäuden oder Fahrzeugen. Da es bei dieser Anwendung darauf ankommt, möglichst die gesamte Wärmestrahlung zu reflektieren, werden hier bevorzugt zwei Schichten mit entgegengesetztem Drehsinn der cholesterischen Helix kombiniert, um links- und rechtshelikale Polarisation zu reflektieren. Besonders bevorzugt werden für diese Anwendung cholesterische Polymerfilme (F) mit Reflexionswellenlängen im IR verwendet, deren Reflexionsbande bei der Filmherstellung beispielsweise durch unten zitierte Maßnahmen zur Erzeugung einer variierenden Ganghöhe der helikalen Struktur zusätzlich verbreitert wurde. In optischen Geräten, die mit polarisiertem Licht arbeiten, wie beispielsweise die Flüssigkristallanzeigen, können cholesterische Polymerfilme vorteilhaft als Zirkularpolarisator für farbiges oder auch weißes Licht eingesetzt werden. Dabei sind die Polymerfilme (F) mit hoher optischer Anisotropie besonders geeignet, da sie wegen der größeren Bandbreite mehr polarisiertes Licht reflektieren. In US 5,235,443 A wird demonstriert, wie eine Schicht aus einem cholesterischen Flüssigkristall durch Ausnutzung der selektiven Reflexion von zirkularpolarisiertem Licht für die Steigerung der Lichtausbeute eines Projektors angewendet werden kann. Durch die Kombination mit einem doppelbrechenden Medium, das beide Polarisationszustände des Lichts relativ zueinander um ein Viertel der Wellenlänge verzögert (λ/4-Folie), ist auch die Erzeugung von linear polarisiertem Licht möglich. Eine solche λ /4-Folie kann ebenfalls durch einen Polymerfilm (F) ohne chirale Komponente (D) realisiert werden. Weitere Kombinationen von mehreren cholesterischen Filmen, die es ermöglichen, die optischen Eigenschaften über einen weiten Spektralbereich einzustellen, sind z. B. bei R. Maurer et al. unter dem Titel "Polarizing Color Filters made from Cholesteric LC Silicones", SID International Symposium Digest of Technical Papers, Vol. 21, Las Vegas, 1990, S. 110 - 113 beschrieben. In den Beispielen wird dort unter anderem auch gezeigt, wie durch eine Kombination von mehreren Schichten mit unterschiedlichem Pitch ein Polarisator mit einer Bandbreite von über 250 nm hergestellt wird, der den gesamten sichtbaren Spektralbereich des Lichtes abdeckt. Eine solche Kombination kann als reflektiver Linearpolarisator für weißes Licht verwendet werden.
Theoretische Überlegungen von R. Dreher, Solid State Communications, Vol. 12, 519 (1973), ebenso S. Mazkedian, S. Melone, F. Rustichelli, J. Physique Colloq. 36, C1-283 (1974) und L. E. Hajdo, A. C. Eringen, J Opt. Soc. Am. 36, 1017 (1976) zeigen, daß ein helikaler Schichtaufbau, dessen Pitch sich linear über die Schichtdicke des Filmes ändert, ebenfalls die Fähigkeit besitzt, zirkularpolarisiertes Licht in einem breiten Bandbereich zu reflektieren. Spezielle Verfahren zur Erzeugung eines solchen Pitchgradienten, die auch für die Polymerfilme (F) geeignet sind, werden beispielsweise in EP 606940 A, EP 875525 A oder EP 885945 A beschrieben. Die polymerisierbare Mischung (P) besitzt dabei die Vorteile, daß sie wegen der höheren optischen Anisotropie schon von vornherein eine höhere Breite der Reflexionsbande besitzt und daß sie wegen der nicht polymerisierbaren Komponenten eine geringere Dichte des polymeren Netzwerks ausbildet, was eine zusätzliche Verbreiterung der Bande nach den obigen Verfahren noch unterstützt. In EP 606939 A ist beschrieben, wie ein solcher cholesterischer Film in Kombination mit einer depolarisierenden Streufolie zur Lichtverstärkung in einem LCD eingesetzt werden kann. Um die Form der cholesterischen Bande an die technischen Anforderungen in einem LCD oder anderen optischen Geräten anzupassen, kann es zweckmäßig sein, mehrere LC-Polymerfilme, von denen einzelne eine verbreiterte Reflexionsbande besitzen können, zu kombinieren.
Cholesterische Flüssigkristalle sind im nicht polymerisierten Zustand thermochrom, d.h. bei einer Temperaturänderung im Bereich der cholesterischen Phase ändert sich die Ganghöhe der helikalen Molekülstruktur und damit die Reflexionswellenlänge. In US 4,637,896 und R. Maurer et al., "Cholesteric Reflectors with a Color Pattern", SID International Symposium Digest of Technical Papers, Vol. 25, San Jose, June 14-16, 1994, S. 399-402, ist beschrieben, wie dieser Effekt ausgenutzt werden kann, eine flächige, farbliche Strukturierung eines LC-Polymerfilms zu erreichen, indem einzelne Bereiche des Films bei unterschiedlichen Temperaturen sukzessiv durch eine Maske mit aktinischem Licht bestrahlt werden. Wenn der Temperaturbereich der flüssigkristallinen Phase weit genug ist, können auf diese Weise Farb- und Polarisationsfilter mit roten, grünen und blauen Pixeln hergestellt werden, die z.B. als LCD-Farbfilter verwendet werden können. Die Polymerfilme (F) mit hoher optischer Anisotropie sind für diese Anwendung besonders gut geeignet, da sich damit Reflexionsbanden bis zu 100 nm Breite realisieren lassen. Dieser Bereich der Bandbreite ist für maximale Helligkeit und Farbsättigung der einzelnen Farbpixel in einem LCD bevorzugt. In Kombination mit einem Zirkularpolarisator für weißes Licht umgekehrter Helizität kann ein solcher strukturierter Farbfilter außerdem zur weiteren Steigerung der Helligkeit eines LCDs oder anderer optischer Geräte, die mit polarisiertem Licht arbeiten, dienen. Bei einigen der zuvor beschriebenen Anwendungen der Polymerfilme (F) ist es auch möglich, statt eines zusammenhängenden Films eine Schicht mit LC-Plättchen zu verwenden. Die speziellen optischen Effekte können auf diese Weise mit wesentlich geringeren Aufwand appliziert werden, da der Anwender konventionelle Druck- und Beschichtungstechnologien verwenden kann, statt die aufwendigere Herstellung der Polymerfilme (F), die einen Orientierungs- und Vernetzungsvorgang erfordert, selbst durchzuführen.

Dazu können die LC-Plättchen aus Polymerfilm (F) wie beispielsweise in EP 601483 A oder EP 685749 A beschrieben, in ein geeignetes Bindemittelsystem eingearbeitet werden. Die geforderten Eigenschaften der Bindemittelsysteme, insbesondere die optischen Eigenschaften, hängen von der beabsichtigten Anwendung der LC-Plättchen ab. Bei Anwendungen, die die polarisations- und wellenlängenselektive Reflexion von LC-Plättchen, die chirale Zusatzstoffe enthalten, ausnutzen, werden bevorzugt Bindemittel eingesetzt, die mindestens im Bereich der Reflexionswellenlänge optisch transparent sind. Für Anwendungen, die die optische Anisotropie im Bereich des sichtbaren Lichts nutzen, sind Bindemittel bevorzugt, die im gesamten sichtbaren Bereich farblos und transparent sind. Für optische Elemente werden bevorzugt Bindemittelsysteme verwendet, deren mittlerer Brechungsindex nach dem Aushärten dem mittleren Brechungsindex der LC-Plättchen ähnlich ist. Zur Herstellung von dauerhaften Schichten, die LC-Plättchen enthalten, sind bevorzugt härtbare Bindemittelsysteme geeignet. Für spezielle Anwendungen können aber auch nicht härtbare Bindemittel, wie beispielsweise Öle und Pasten verwendet werden. Besonders bevorzugt sind Bindemittelsysteme, die die physikalischen Eigenschaften der LC-Plättchen nicht oder nur in definierter Weise verändern. Geeignete Bindemittelsysteme sind beispielsweise polymerisierbare Harze (UP-Harze, Siliconharze, Epoxidharze), Dispersionen, lösungsmittelhaltige Lacke oder Wasserlacke oder alle transparenten Kunststoffe, beispielsweise Polyvinylchlorid, Polymethylmethacrylat, Polycarbonat. Neben diesen isotropen Bindemitteln können auch flüssigkristalline Systeme als Bindemittel verwendet werden, beispielsweise flüssigkristalline Polymere oder polymerisierbare flüssigkristalline Harze, sowie polymerisierbare LC-Silicone. Zur Herstellung einer Schicht oder einer Folie mit speziellen optische Eigenschaften werden die LC-Plättchen aus Polymerfilm (F) in ein flüssiges Bindemittel eingerührt. Die Orientierung der Plättchen parallel zur Oberfläche der Schicht geschieht wie bei der Lackierung mit flüssigkristallinen Farbpigmenten (siehe z.B EP 601483 A) beim Auftragen einer dünnen Schicht des Pigment - Bindemittelgemischs auf ein Substrat oder bei der Extrusion des Gemischs. Abhängig von den Anforderungen der jeweiligen Anwendung und den Eigenschaften des Bindemittels kann der Film nach dem Aushärten vom Substrat abgelöst werden. Die Anwendungen der LC-Plättchen aus Polymerfilm (F) können ebenso wie bei den Polymerfilmen (F) eine Phasenverzögerung oder die polarisations- und wellenlängenselektive Reflexion elektromagnetischer Wellen vom ultravioletten bis zum infraroten Bereich sein. Ein Beispiel für die Verwendung der LC-Plättchen ist die Herstellung optisch abbildender, wellenlängen - und polarisationsselektiver Elemente auf gekrümmten Substraten (EP 685749 A). Für dekorative Zwecke sind die LC-Plättchen aus Polymerfilm (F) besonders geeignet, wenn die Konzentration der Chiralika so gewählt ist, daß die Reflexionswellenlänge der cholesterischen Bande im sichtbaren Wellenlängenbereich liegt. Bei Anwendungen im Wertdruck und Markenschutz sind der blickwinkelabhängige Farbeindruck und die Polarisation des reflektierten Lichts zusätzliche Sicherheitsmerkmale. Bei gleichzeitiger Verwendung von LC-Plättchen mit links- und rechtshelikaler Struktur können dreidimensionale Drucke hergestellt werden (US 5,599,412). Für die Herstellung von Sicherheitsmarkierungen zum Schutz vor Fälschungen von beispielsweise Banknoten, Wertdrucken, Dokumenten oder im Markenschutz können die LC-Plättchen aus Polymerfilm (F) besonders vorteilhaft eingesetzt werden, da sie meist mit relativ geringem Aufwand in die bei diesen Anwendungen bereits existierenden Druck- oder anderen Beschichtungsprozessen inkorporiert werden können. IR-reflektierenden LC-Plättchen, die man bei geringer Konzentration an Chiralika erhält, sind für solche Anwendungen im Bereich des sichtbaren Lichts bevorzugt transparent und farblos. Die Wellenlänge der unteren Bandkante der Reflexionsbande liegt dabei bevorzugt über 750 nm. Solche LC-Plättchen sind geeignet für das menschliche Auge unsichtbare Markierungen herzustellen, die wegen ihrer guten Reflexion im IR-Bereich von Geräten mit IR-Detektoren registriert werden können. Neben der Reflexionswellenlänge kann dabei auch die Zirkularpolarisation der reflektierten Strahlung als zusätzliches Sicherheitsmerkmal detektiert werden. Die CLC-Plättchen aus Polymerfilm (F) werden für diese Anwendung bevorzugt in einem IR-transparenten Bindemittel auf ein zu markierendes Substrat aufgebracht.

Die Polymere (F) sind geeignet zur Verwendung für diverse optische Anwendungen, wie wellenlängenselektive optische Elemente für elektromagnetische Strahlung, optische Elemente mit Phasenverzögerung für elektromagnetische Strahlung und polarisationsselektive optische Elemente für elektromagnetische Strahlung, die auch in Flüssigkristallanzeigevorrichtungen eingesetzt werden können.

Wellenlängenselektive optische Elemente für elektromagnetische Strahlung vom nahen ultraviolett bis zum infraroten Bereich können hergestellt werden unter Verwendung optisch anisotroper Polymerfilme (F) oder Plättchen daraus, wobei die polymerisierbaren Mischungen (P) mindestens eine chirale Komponente oder mindestens einen Farbstoff enthält. Optische Elemente mit Phasenverzögerung für elektromagnetische Strahlung und polarisationsselektive optische Elemente für elektromagnetische Strahlung können hergestellt werden unter Verwendung optisch anisotroper Polymerfilme (F) oder Plättchen daraus.

Es können Flüssigkristallanzeigevorrichtungen hergestellt werden, die optisch anisotrope Polymerfilme (F) oder Plättchen daraus oder mindestens ein optisches Element, das unter Verwendung optisch anisotroper Polymere (F) hergestellt wurde, enthalten. Insbesondere sind dies Flüssigkristallvorrichtungen mit einem zwischen zwei Elektroden angeordneten flüssigkristallinen Material, gegebenenfalls weiteren optischen Komponenten wie Lichtquelle, Spiegel, Polarisatoren, Retarder, Farbfilter und mindestens einem Film zur Erzeugung einer optischen Verzögerung oder mindestens einem Film zur Erzeugung oder Erhöhung der Ausbeute von polarisiertem Licht oder mindestens einem Film zur Selektion von farbigem Licht, wobei diese Verzögerungsfilme oder Polarisationsfilme oder Farbfilter hergestellt werden unter Verwendung optisch anisotroper Polymere (F).

### Beispiele:

In diesen Beispielen sind, falls jeweils nicht anders angegeben, alle Mengen- und Prozentangaben auf das Gewicht bezogen. Die in den Beispielen verwendeten Mischungskomponenten und ihre Synthesen sind nach dem Stand der Technik bekannt. Im Einzelnen wurden hergestellt und verwendet:
M.1: Eine Verbindung mit zwei polymerisierbaren Gruppen Hydrochinon-bis-(4-(4-acryloylbutoxy)-benzoat) (EP 261712 A) wurde hergestellt nach dem Verfahren aus EP 1059282 A. Der Temperaturbereich der nematischen Phase liegt zwischen 93°C und 162°C. 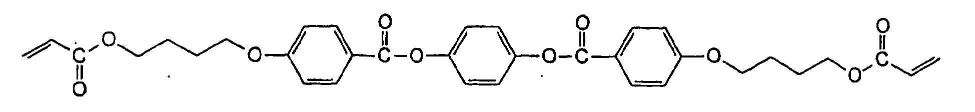
M.2: Flüssigkristalline Verbindungen mit einer polymerisierbaren Gruppe wurden hergestellt wie in M. Portugall et al., Macromol. Chem. 183 (1982) 2311 beschrieben.
M.2.1: 9-Acryloylbenzoesäure-4'-biphenylester mit einer nematischen Phase zwischen 133°C und 171°C (unterkühlbar bis 104°C) 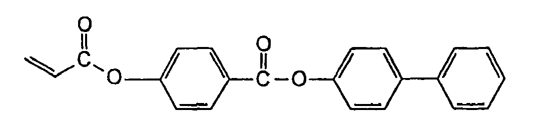
M.2.2: 4- (4 '-Acryloylbutoxy) -benzoesäure-4"-biphenylester nach US 4,293,435 Beispiel 1.2.4 mit einer unterkühlbaren nematischen Phase zwischen 66°C und 93°C (unterkühlbar bis 104°C) 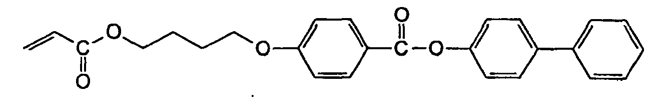
M.2.3: 4-(4'-Acryloylbutoxy)-benzoesäure-(4''-cyanobiphenyl)-ester mit einer nematischen Phase zwischen 122°C und 219°C (unterkühlbar bis 90°C) 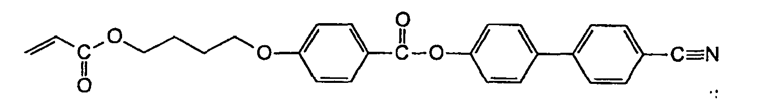
M.2.4: 4-(Acryloyloxybutoxy)benzoesäure-(6-cyanonaphth-2-yl)-ester mit einer nematischen Phase zwischen 111°C und 130°C (unterkühlbar bis 25°C) 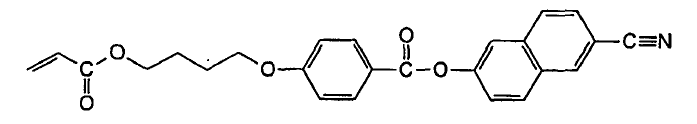
M.3: Mesogene Verbindungen, die keine Gruppen enthalten, die mit den Verbindungen aus M.1 und M.2 polymerisieren, wurden nach dem in EP 60335 A beschrieben Verfahren hergestellt. M.3.1: 4-Allyloxybenzoesäure-4'-biphenylester mit einer nematischen Phase zwischen 139°C und 142°C (unterkühlbar bis 129°C) 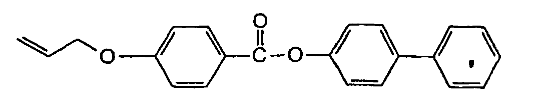
M.3.2: 4-Allyloxybenzoesäure-(4'-cyanobiphenyl)ester nach EP 446912 A mit einer nematischen Phase von 105°C bis über 260°C (unterkühlbar bis 80°C) 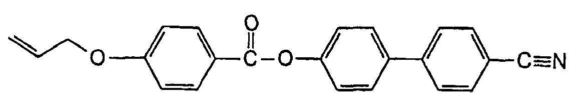
M.3.3: 4-Butoxybenzoesäure-(4'-cyanobiphenyl)ester mit einer nematischen Phase von 121°C bis über 270°C (unterkühlbar bis 101°C) 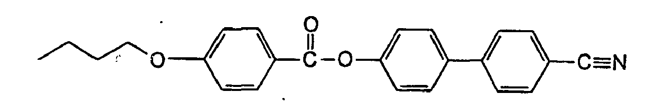
M.3.4: 4-Allyloxybenzoesäure-(6-cyanonaphth-2-yl)-ester mit einer nematischen Phase zwischen 145°C und 188°C (unterkühlbar bis 132°C) 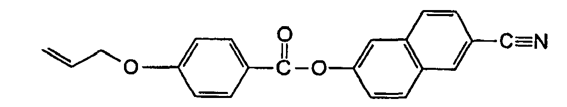
M.3.5: 4-Allyloxybenzoesäure-4'-methoxyphenylester mit einem Schmelzpunkt bei 88°C (unterkühlbare nematische Phase vom Schmelzpunkt bis 82°C) 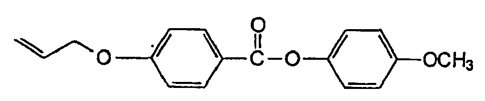
M.4: Polymerisierbares Chiralikum 2,5-bis-[4-[(1-oxo-2-propenyl)oxy]benzoate]-1,4:3,6-dianhydro-D-Glucitol nach EP 1046692 A1

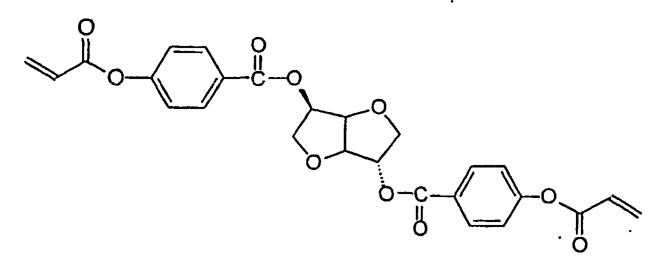

### Beispiel 1:

Im Rahmen der Untersuchungen zu Beispiel 1 wurden u.a. zeitaufgelösten Messungen durchgeführt, bei denen die Abnahme der optischen Anisotropie während der Polymerisation direkt verfolgt werden konnte.

a) 1,45 g (30 %) der Verbindung Hydrochinon-bis-(4-acryloylbutoxy)-benzoat (M.1), 0,97 g (20 %) der Verbindung 4-Acryloylbenzoesäure-4'-biphenylester (M.2.1), 2,37 g (49 %) der Verbindung 4-Allyloxybenzoesäure-4'-biphenylester (M.3.1), 50 mg (1 %) Photoinitiator 2-Methyl-1-[4-(methylthio)phenyl]-2-morpholinopropanon-1 (erhältlich als Irgacure® 907 bei der Ciba Spezialitätenchemie GmbH, Lampertsheim) und 10 mg (0,2 %) Stabilisator 2,6-Di-tert-butyl-4-methylphenol (BHT) wurden als Schmelze bei 120°C verrührt, bis eine homogene Mischung vorlag (Mischung 1a). Zwei Glasplatten wurden mit je einer Orientierungsschicht aus Polyvinylalkohol versehen, die mit einem Samttuch unidirektionell gerieben wurde. 5 mg der nematischen LC-Mischung la wurde bei 120°C auf die Orientierungsschicht einer der Glasplatten aufgetragen und mit der zweiten Platte so abgedeckt, daß die Reibrichtungen entgegengesetzt und parallel lagen. Durch gleichmäßigen Druck auf die Platten unter Verwendung von Abstandshaltern aus Glas wurde die Mischung verteilt, bis ein ca. 10 µm dicker Film zwischen den Orientierungsschichten verblieb. Der Film wurde einige Minuten bei 120°C getempert bis er vollständig klar wurde.
Die optische Anisotropie dieses Films wurde mit Hilfe der Senarmont-Methode bei der Lichtwellenlänge 633 nm bestimmt. Die Meßapparatur besteht aus einem He-Ne-Laser und in Strahlrichtung einem Glan-Thompson-Prisma als Polarisator, der Probe, die in einem Mikroskop-Heiztisch auf einer Temperatur von 120°C gehalten wird, einem λ/4-Plättchen, einem weiteren um die Strahlachse drehbaren Glan-Thompson-Prisma als Analysator und einer Fotodiode. Um die höchstmögliche Sensitivität zu erreichen, ist der Winkel des Analysators relativ zur Probe so eingestellt, daß die Transmission des Laserstrahls durch die Anordnung minimal wird. Der Laserstrahl wird durch eine rotierende Lochblende getaktet. Die Transmission wird über den Strom der Fotodiode, die an einen Lock-In-Verstärkerer angeschlossen ist, elektronisch aufgezeichnet. Auf diese Weise können Änderungen in der optischen Anisotropie zeitlich verfolgt werden.
Als optische Verzögerung des unvernetzten Films wurde 2200 nm gemessen, was bei einer nachträglich bestimmten Filmdicke von 10,6 µm einer optischen Anisotropie von Δn = 0,208 entspricht. Die Probe wurde dann bei laufender Messung mit UV-A-Licht (ca. 20 mW/cm²) bestrahlt. Innerhalb weniger Sekunden nahm der Diodenstrom von 2,1 nA auf 2,5 nA geringfügig zu und blieb danach konstant. Die entsprechende Δn - Änderung ist kleiner als 1% und damit kleiner als der Meßfehler für den Absolutwert der optischen Anisotropie, der bei etwa 3% liegt. Die genaue Dicke des vernetzten Films am Meßfleck wurde anschließend anhand der Interferenzen an dünnen Schichten in einem UV-VIS - Spektrometer (Lamda 19 von Perkin-Elmer) bestimmt. Die optischen Anisotropie Δn einer zweiten, vollständig vernetzten Probe der LC Polymermischung 1a wurde zusätzlich mit einem Prismenkoppler (Metricon Model 2010), der ebenfalls einen He-Ne-Laser mit Wellenlänge 633 nm enthält, direkt gemessen. Dazu wurde nach der UV-Bestrahlung eine der Glasplatten von der LC-Schicht abgelöst. Der Meßwert Δn = 0,212 stimmt im Rahmen der Meßfehler mit dem Wert aus der Senarmont-Methode überein.

### b) nicht erfindungsgemäß

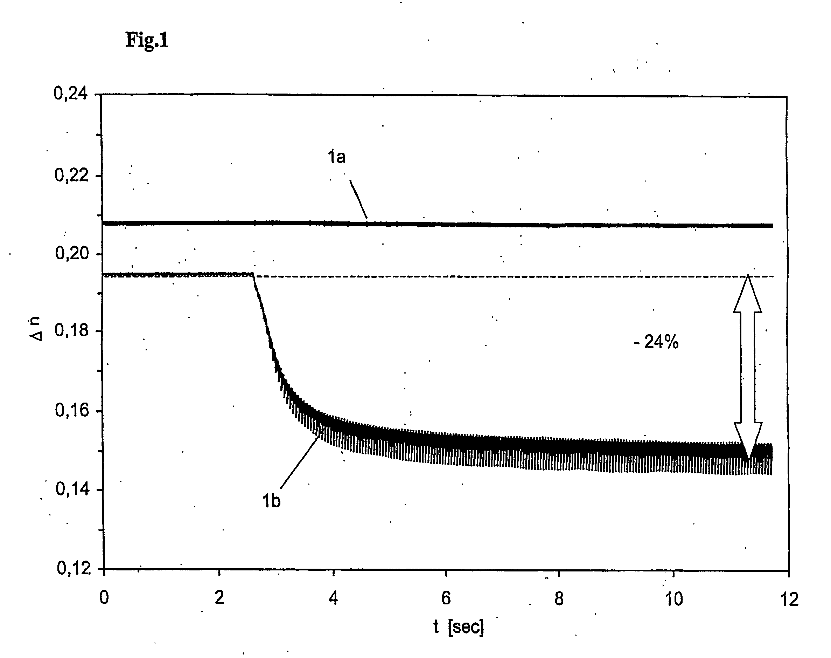

3 g (60 %) Hydrochinon-bis- (4-acryloylbutoxy)-benzoat (M.1), 2 g (40 %) 4-Acryloylbenzoesäure-4'-biphenylester (M.2.1), 50 mg (1 %) photoinitiator Irgacure® 907 und 10 mg (0,2 %) Stabilisator BHT wurden als Schmelze bei 120°C verrührt, bis eine homogene Mischung vorlag (Mischung 1b). Zwei Glasplatten wurden mit je einer Orientierungsschicht aus Polyvinylalkohol versehen, die mit einem Samttuch unidirektionell gerieben wurde. 5 mg der nematischen LC-Mischung 1b wurde bei 120°C auf die Orientierungsschicht einer der Glasplatten aufgetragen und mit der zweiten Platte so abgedeckt, daß die Reibrichtungen entgegengesetzt und parallel lagen. Durch gleichmäßigen Druck auf die Platten wurde die Mischung verteilt, bis ein ca. 10 µm dicker Film zwischen den Orientierungsschichten verblieb. Der Film wurde einige Minuten bei 120°C getempert bis er vollständig klar wurde.
Die optische Verzögerung wurde wie in Beispiel a) mit Hilfe der Senarmont-Methode bestimmt. Für den unvernetzten Film wurde 2130 nm gemessen, was bei einer nachträglich bestimmten Filmdicke von 10,9 µm einer optischen Anisotropie von Δn = 0,195 entspricht. Die Probe wurde dann wie in Beispiel a) bei laufender Messung mit UV-A-Licht bestrahlt (Startpunkt in Figur 1 bei etwa 3 sec.). Innerhalb weniger Sekunden stieg der Diodenstrom stark an und blieb danach konstant. Die optische Verzögerung der Probe betrug am Ende 1620 nm mit Δn = 0,149. Dieser Meßwert wurde nachträglich mit einer direkten Messung des Δn im Prismenkoppler verifiziert. Die Dicke des vernetzten Films am Meßfleck wurde anhand der Interferenzen an dünnen Schichten im UV-VIS - Spektrometer bestimmt. In Figur 1 ist die aus dem Diodenstrom abgeleitete optischen Anisotropie Δn als Funktion der Zeit aufgetragen und mit der entsprechenden Kurve für das Beispiel 1a) verglichen. Während die Kurve für 1a) nahezu konstant bleibt, beobachtet man bei 1b) eine Abnahme des Δn um 24%.

### c) erfindungsgemäß

1,45 g (30 %) der Verbindung Hydrochinon-bis-(4-acryloylbutoxy)-benzoat (M.1), 0,97 g (20 %) der Verbindung 4-Acryloylbenzoesäure-4'-biphenylester (M.2.1), 2,37 g (49 %) der Verbindung 4-Allyloxybenzoesäure-4'-methoxyphenylester (M.3.5), 50 mg (1 %) Photoinitiator Irgacure® 907 und 10 mg (0,2 %) Stabilisator BHT wurden als Schmelze bei 120°C verrührt, bis eine homogene Mischung vorlag (Mischung 1d). Zwei Glasplatten wurden mit je einer Orientierungsschicht aus Polyvinylalkohol versehen, die mit einem Samttuch unidirektionell gerieben wurde. Aus 5 mg der nematischen LC-Mischung 1c wurde wie in Beispiel a) ein orientierter Film zwischen zwei Glasplatten mit Orientierungsschichten aus geriebenem Polyvinylalkohol hergestellt. Der Film wurde einige Minuten bei 90°C getempert bis er vollständig klar wurde. Die optische Verzögerung wurde mit Hilfe der Sénarmont-Methode bestimmt. Für den unvernetzten Film wurde 1890 nm gemessen, was bei einer nachträglich bestimmten Filmdicke von 10,9 µm einer optischen Anisotropie von Δn = 0,173 entspricht. Die Probe wurde dann wie in Beispiel a) bei laufender Messung mit UV-A-Licht bestrahlt. Innerhalb weniger Sekunden stieg der Diodenstrom stark an und blieb danach konstant. Die optische Verzögerung der Probe betrug am Ende 1780 nm mit Δn = 0,163. Dieser Meßwert für Δn wurde zusätzlich im Prismenkoppler verifiziert.

d) 2,1 g (42 %) Hydrochinon-bis-(4-acryloylbutoxy)-benzoat (M.1), 1,4 g (28 %) 4-Acryloylbenzoesäure-4`-biphenylester (M.2.1), 1,5 g (30 %) 4-Allyloxybenzoesäure-4'-biphenylester (M.3.1), 50 mg Photoinitiator Irgacure® 907 und 10 mg Stabilisator BHT wurden als Schmelze bei 120°C verrührt, bis eine homogene Mischung vorlag (Mischung 1c). Es wurde wie in Beispiel 1a) eine Probe davon zwischen Glasplatten orientiert und vernetzt. Nach Entfernen einer der Glasplatten wurde die optische Anisotropie Δn bei 633 nm mit einem Prismenkoppler (Metricon Model 2010) direkt gemessen. Das Ergebnis Δn = 0,183 lag 23% über dem Wert der vernetzten LC-Polymermischung 1b). d) Die mechanischen Eigenschaften der hergestellten LC-Polymerfilme wurden mit Hilfe eines Nanoindentergeräts getestet (NanoTest 600 von Micro Materials). Dazu wurde eine Reihe von Mischungen aus (1-x) . 60 % Hydrochinon-bis-(4-acryloylbutoxy)-benzoat (M.1), (1-x) 40 % 4-Acryloylbenzoesäure-4'-biphenylester (M.2.1), (x . 100 %) 4-Allyloxybenzoesäure-4'-biphenylester (M.3.1) und jeweils-1% Photoinitiator Irgacure® 907 und 0,2 % Stabilisator BHT hergestellt. Die Mischungen wurden als Schmelze bei 120°C homogen verrührt und kleine Proben davon wurde wie in Beispiel 1a) zwischen Glasplatten orientiert und durch Bestrahlung mit einer UV-Lampe vernetzt. Anschließend wurde eine der Glasplatten abgelöst.
Die Härte der offenen Polymerfilme wurde mit einer Berkovitch-Diamantspitze gemessen, die bei den Messungen etwa 1 µm in die ca. 11 µm dicken Filme hineingedrückt wurde. In Tabelle 1 ist die Härte H bei Raumtemperatur als Funktion des Gewichtsanteils x der nicht polymerisierbaren Komponente 4-Allyloxybenzoesäure-4'-biphenylester dargestellt. Bis zu einem Anteil von ca. 30 % 4-Allyloxybenzoesäure-4'-biphenylester bleibt die Härte nahezu konstant. Darüber nehmen die Härte und die mechanische Stabilität der Polymerfilme stark ab, was auf eine Strukturänderung hindeutet. Im Polarisationsmikroskop wird beobachtet, daß die Materialzusammensetzung der Filme über 50 % 4-Allyloxybenzoesäure-4'-biphenylester bei Raumtemperatur inhomogen wird, da Anteile von nichtpolymerisierten Komponenten auszukristallisieren beginnen. Für die Polymerfilme (F) ist bei dieser speziellen LC-Mischung daher ein Anteil von 30% bis maximal 40% 4-Allyloxybenzoesäure-4'-biphenylester bevorzugt.

**Tabelle 1: Härte H der Polymerfilme aus Beispiel 1d) bei Raumtemperatur als Funktion des Gewichtsanteils x von 4-Allyloxybenzoesäure-4'-biphenylester.**

| x | Härte |
|---|---|
| 0 % | 0,22 |
| 30 % | 0,19 |
| 45 % | 0,12 |
| 49 % | 0,10 |
| 60 % | 0, 10 |

### Beispiel 2

2,1 g (42 %) Hydrochinon-bis-(4-acryloylbutoxy)-benzoat (M.1), 1,4 g (28 %) 4-Acryloylbenzoesäure-4'-biphenylester (M.2.1), 1,5 g (30 %) 4-Butoxybenzoesäure-(4'-cyanobiphenyl)ester (M.3.3), 50 mg Photoinitiator Irgaure® 819 (Ciba Spezialitätenchemie GmbH, Lampertsheim) und 10 mg Stabilisator BHT wurden als Schmelze bei 120°C verrührt, bis eine homogene Mischung vorlag (Mischung 2). 5 mg dieser nematischen LC-Mischung wurde wie in Beispiel 1a) zwischen zwei mit Orientierungsschichten versehenen Glasplatten aufgetragen und verteilt, bis ein ca. 10 µm dicker Film verblieb. Der Film wurde einige Minuten bei 120°C getempert bis er vollständig klar wurde und dann mit UV-A-Licht (ca. 100 mW/cm²) vernetzt. Nach Entfernen einer der Glasplatten wurde die optischen Anisotropie Δn bei 633 nm mit einem Prismenkoppler (Metricon Model 2010) direkt gemessen. Das Ergebnis Δn = 0,196 lag 32% über dem Wert der vernetzten LC-Polymermischung 1b).

### Beispiel 3

1,5 g (30 %) Hydrochinon-bis-(4-acryloylbutoxy)-benzoat (M.1), 1,75 g (35 %) 4- (4 `-Acryloylbutoxy) -benzoesäure-4"-biphenylester (M.2.2), 1,75 g (35 %) 4-Allyloxybenzoesäure-4'-biphenylester (M.3.1), 50 mg Photoinitiator Irgacure® 907 und 10 mg Stabilisator BHT wurden als Schmelze bei 120°C verrührt, bis eine homogene Mischung vorlag (Mischung 3). 5 mg dieser nematischen LC-Mischung wurde wie in Beispiel 1a) zwischen zwei mit Orientierungsschichten versehenen Glasplatten aufgetragen und verteilt, bis ein ca. 10 µm dicker Film verblieb. Der Film wurde einige Minuten bei 90°C getempert bis er vollständig klar wurde. Die optische Verzögerung bei 633 nm wurde wie zuvor beschrieben mit Hilfe der Senarmont-Methode bestimmt. Für den unvernetzten Film wurde 2190 nm gemessen, was bei einer nachträglich im UV-VIS-Spektrometer bestimmten Filmdicke von 10,9 µm einer optischen Anisotropie von Δn = 0,201 entspricht. Während der Bestrahlung mit UV-A-Licht nahm die optische Anisotropie geringfügig ab auf einen Endwert von Δn = 0,193.

### Beispiel 4

a) 685 mg (30 %) Hydrochinon-bis-(4-acryloylbutoxy)-benzoat ; (M.1), 804 mg (35 %) 4-(4'-Acryloylbutoxy)-benzoesäure-4"-biphenylester (M.2.2), 806 mg (35 %) 4-Allyloxybenzoesäure-4'-biphenylester (M.3.1), 23 mg Photoinitiator Irgacure® 819 (Ciba Spezialitätenchemie GmbH, Lampertsheim) und 6 mg Stabilisator BHT wurden als Schmelze bei 140°C verrührt, bis eine homogene Mischung vorlag (Mischung 4a). 5 mg dieser nematischen LC-Mischung wurde wie in Beispiel 1a) zwischen zwei mit Orientierungsschichten versehenen Glasplatten aufgetragen und verteilt, bis ein ca. 10 µm dicker Film verblieb. Der Film wurde einige Minuten bei 90°C getempert bis er vollständig klar wurde und dann mit UV-A-Licht (ca. 100 mW/cm²) vernetzt. Nach Ablösen einer der Glasplatten wurde die optische Anisotropie des LC-Polymerfilms mit einem Prismenkoppler (Metricon Model 2010) gemessen mit dem Ergebnis Δn = 0,211 bei 633 nm. b) (nicht erfindungsgemäß) Zum Vergleich wurde auf die gleiche Weise ein Polymerfilm aus 1,056 g (50 %) Hydrochinon-bis-(4-acryloylbutoxy)-benzoat (M.1), 1,058 g (50 %) 4-(4'-Acryloylbutoxy)-benzoesäure-4"-biphenylester (M.2.2), 22 mg Photoinitiator Irgacure® 819 und 4 mg Stabilisator BHT präpariert. Die bei 633 nm mit dem Prismenkoppler gemessene optische Anisotropie der bei 90°C orientierten und vernetzten Probe betrug Δn = 0,171.

### Beispiel 5

a) 740 mg (30 %) Hydrochinon-bis-(4-acryloylbutoxy)-benzoat (M.1), 868 mg (35 %) 4-(4'-Acryloylbutoxy)-benzoesäure-(4"-cyanobiphenyl)-ester (M.2.3), 865 mg (35 %) 4-Allyloxybenzoesäure-(4'-cyanobiphenyl)ester (M.3.2), 25 mg Photoinitiator Irgacure® 819 und 4 mg Stabilisator BHT wurden als Schmelze bei 150°C verrührt, bis eine homogene Mischung vorlag (Mischung 5a). 5 mg dieser nematischen LC-Mischung wurde wie in Beispiel 1a) zwischen zwei mit Orientierungsschichten versehenen Glasplatten aufgetragen und verteilt, bis ein ca. 10 µm dicker Film verblieb. Der Film wurde einige Minuten bei 150°C getempert bis er vollständig klar wurde und dann mit UV-A-Licht (ca. 100 mW/cm²) vernetzt. Nach Ablösen einer der Gläsplatten wurde die optische Anisotropie des LC-Polymerfilms mit einem Prismenkoppler (Metricon Model 2010) gemessen mit dem Ergebnis Δn = 0,248 bei 633 nm.
b) (nicht erfindungsgemäß) Zum Vergleich wurde auf die gleiche Weise ein Polymerfilm aus 740 mg (74 %) Hydrochinon-bis-(4-acryloylbutoxy)-benzoat (M.1), 248 mg (25 %) 4-(4'-Acryloylbutoxy)-benzoesäure-(4"-cyanobiphenyl)-ester (M.2.3), 10 mg Photoinitiator Irgacure® 819 und 3 mg Stabilisator BHT präpariert. Die bei 633 nm mit dem Prismenkoppler gemessene optische Anisotropie der bei 145°C orientierten und vernetzten Probe betrug Δn = 0,177.

### Beispiel 6

a) 660 mg (30 %) Hydrochinon-bis-(4-acryloylbutoxy)-benzoat (M.1), 770 mg (35 %) 4-(Acryloyloxybutoxy)benzoesäure-(6-cyanonaphth-2-yl)-ester (M.2.4), 771 mg (35 %) 4-Allyloxybenzoesäure-(6-cyanonaphth-2-yl)-ester (M.3.4), 23 mg Photoinitiator Irgacure® 819 und 5 mg Stabilisator BHT wurden als Schmelze bei 140°C verrührt, bis eine homogene Mischung vorlag (Mischung 6a). 5 mg dieser nematischen LC-Mischung wurde wie in Beispiel 1a) zwischen zwei mit Orientierungsschichten versehenen Glasplatten aufgetragen und verteilt, bis ein ca. 10 µm dicker Film verblieb. Der Film wurde einige Minuten bei 130°C getempert bis er vollständig klar wurde und dann mit UV-A-Licht (ca. 100 mW/cm²) vernetzt. Nach Ablösen einer der Glasplatten wurde die optische Anisotropie des LC-Polymerfilms mit einem Prismenkoppler (Metricon Model 2010) gemessen mit dem Ergebnis Δn = 0,225 bei 633 nm.
b) (nicht erfindungsgemäß) Zum Vergleich wurde auf die gleiche Weise ein Polymerfilm aus 1,01 g (50 %) Hydrochinon-bis-(4-acryloylbutoxy) -benzoat (M.1), 1,02 g (50 %) 4-(Acryloyloxybutoxy)benzoesäure-(6-cyanonaphth-2-yl)-ester (M.2.4), 21 mg Photoinitiator Irgacure® 819 und 5 mg Stabilisator BHT präpariert. Die bei 633 nm mit dem Prismenkoppler gemessene optische Anisotropie der bei 110°C orientierten und vernetzten Probe betrug Δn = 0,178.

### Beispiel 7

626 mg (31 %) Hydrochinon-bis-(4-acryloylbutoxy)-benzoat (M.1), 606 mg (30 %) 4-(4`-Acryloylbutoxy)-benzoesäure-4"-biphenylester (M.2.2), 607 mg (30 %) 4-Butoxybenzoesäure-(4'-cyanobiphenyl)ester (M.3.3), 162 mg (8 %) 2,5-bis-[4-[(1-oxo-2-propenyl)oxy]benzoate)-1,4:3,6-dianhydro-D-Glucitol, 21 mg Photoinitiator Irgacure® 819 und 4 mg Stabilisator BHT wurden als Schmelze bei 100°C verrührt, bis eine homogene Mischung vorlag (Mischung 7a). 5 mg dieser cholesterischen LC-Mischung wurde wie in Beispiel 1a) zwischen zwei mit Orientierungsschichten versehenen Glasplatten aufgetragen und verteilt, bis ein ca. 10 µm dicker Film verblieb. Der Film wurde einige Minuten bei 100°C getempert bis er vollständig klar wurde und dann mit UV-A-Licht (ca. 100 mW/cm²) vernetzt. Bei senkrechter Betrachtung bei Tageslicht hatte der Film eine blaue Farbe. Nach Ablösen einer der Glasplatten wurde die optische Anisotropie des LC-Polymerfilms mit dem Prismenkoppler gemessen. Die Auswertung dieser Messung nach W.U. Müller and H. Stegemeyer, Berichte der Bunsen-Gesellschaft 77/1, Seite 20 (1973) ergab für die Anisotropie einer einzelnen nematischen Schicht in der cholesterischen Struktur Δn = 0,191 bei 633 nm.

### Beispiel 8

a) 1,72 g (31,5 %) Hydrochinon-bis-(4-acryloylbutoxy)-benzoat (M.1), 2,45 g (45 %) 4-(4'-Acryloylbutoxy)-benzoesäure-4"-biphenylester (M.2.2), 0,74 g (13,5 %) 4-Allyloxybenzoesäure-4'-biphenylester (M.3.1), 420 mg (7,8 %) 2,5-bis-[4-[(1-oxo-2-propenyl)oxy]benzoate]-1,4:3,6-dianhydro-D-Glucitol, 110 mg Photoinitiator Irgacure® 819, 12 mg Stabilisator BHT und 5 mg Siliconöl AF98/300 (erhältlich bei der Wacker Chemie GmbH, München) wurden in einem Lösungsmittelgemisch aus 14,7 g Tetrahydrofuran (THF) und 1,6 g Toluol gelöst (Mischung 8a). Diese Lösung wurde durch Spincoating auf eine Polyethylenterephtalatfolie (PET) aufgetragen und getrocknet, so daß ein ca. 5 µm dicker Film verblieb. Der Film wurde 10 Minuten bei 90°C getempert bis er vollständig klar wurde und dann mit UV-A-Licht (ca. 100 mW/cm²) vernetzt. Bei senkrechter Betrachtung bei Tageslicht hatte der Film eine blaue Farbe. Die Messung der Transmission in einem UV-VIS - Spektrometer (Lamda 19 von Perkin-Elmer) ergab eine nahezu kastenförmige Bande bei 475 nm mit einer Halbwertsbreite von 50 nm. Die Messung der optischen Anisotropie des LC-Polymerfilms mit dem Prismenkoppler und Auswertung wie in Beispiel 7 ergab für die Anisotropie einer einzelnen nematischen Schicht in der cholesterischen Struktur Δn = 0,161 bei 633 nm.
b) wie in Beispiel a) wurde ein Polymerfilm aus einer Lösung von 1,74 g (31,8 %) Hydrochinon-bis-(4-acryloylbutoxy)-benzoat (M.1), 2,51 g (45,5 %) 4-(4'-Acryloylbutoxy)-benzoesäure-4"-biphenylester (M.2.2), 0,745 g (13,6 %) 4-Allyloxybenzoesäure-4'-biphenylester (M.3.1), 375 mg (6,8 %) 2,5-bis-[4-[(1-oxo-2-propenyl)oxy]benzoate]-1,4:3,6-dianhydro-D-Glucitol, 112 mg Photoinitiator Irgacure® 819, 11 mg Stabilisator BHT und 5 mg Siliconöl AF98/300 in einem Lösungsmittelgemisch aus 14,7 g Tetrahydrofuran (THF) und 1,6 g Toluol hergestellt (Mischung 8b). Bei senkrechter Betrachtung reflektierte der Film grünes Licht bei 543 nm mit einer Halbwertsbreite von 60 nm. Die Messung der optischen Anisotropie einer einzelnen nematischen Schicht in der cholesterischen Struktur ergab Δn = 0,163 bei 633 nm.
c) wie in Beispiel a) wurde ein Polymerfilm aus einer Lösung von 1,71 g (32,1 %) Hydrochinon-bis-(4-acryloylbutoxy)-benzoat (M.1), 2,44 g (45,9 %) 4-(4`-Acryloylbutoxy)-benzoesäure-4"-biphenylester (M.2.2), 0,748 g (13,8 %) 4-Allyloxybenzoesäure-4'-biphenylester (M.3.1), 325 mg (5,9 %) 2,5-bis-[4-[(1-oxo-2-propenyl)oxy]benzoate]-1,4:3,6-dianhydro-D-Glucitol, 108 mg Photoinitiator Irgacure® 819, 11 mg Stabilisator BHT und 5 mg Siliconöl AF98/300 in einem Lösungsmittelgemisch aus 14,3 g Tetrahydrofuran (THF) und 1,5 g Toluol hergestellt (Mischung 8c). Bei senkrechter Betrachtung reflektierte der Film gelbes Licht bei 610 nm mit einer Halbwertsbreite von 70 nm. Die Messung der optischen Anisotropie einer einzelnen nematischen Schicht in der cholesterischen Struktur ergab Δn = 0,168 bei 633 nm.
d) wie in Beispiel a) wurde ein Polymerfilm aus einer Lösung von 1,72 g (32,4 %) Hydrochinon-bis-(4-acryloylbutoxy)-benzoat (M.1), 2,46 g (46,3 %) 4-(4'-Acryloylbutoxy)-benzoesäure-4"-biphenylester (M.2.2), 0,738 g (13,9 %) 4-Allyloxybenzoesäure-4'-biphenylester (M.3.1), 278 mg (5,2 %) 2,5-bis-[4-[(1-oxo-2-propenyl)oxy]benzoate]-1,4:3,6-dianhydro-D-Glucitol, 107 mg Photoinitiator Irgacure® 819, 12 mg Stabilisator BHT und 5 mg Siliconöl AF98/300 in einem Lösungsmittelgemisch aus 14,6 g Tetrahydrofuran (THF) und 1,6 g Toluol hergestellt (Mischung 8d). Bei senkrechter Betrachtung reflektierte der Film gelbes Licht bei 720 nm mit einer Halbwertsbreite von 90 nm. Die Messung der optischen Anisotropie einer einzelnen nematischen Schicht in der cholesterischen Struktur ergab Δn = 0,172 bei 633 nm.
e) Auf den Polymerfilm aus Beispiel 8a) wurde die Mischung 8b) durch Spincoating aufgetragen und getrocknet, so daß ein zweiter ca. 5 µm dicker Film verblieb. Der Film wurde 10 Minuten bei 90°C getempert bis er klar wurde und dann mit UV-A-Licht (ca. 100 mW/cm²) vernetzt. Dann wurde die Mischung 8c) durch Spincoating aufgetragen und getrocknet, so daß ein dritter ca. 5 µm dicker Film verblieb. Der Film wurde 10 Minuten bei 90°C getempert bis er klar wurde und dann mit UV-A-Licht (ca. 100 mW/cm²) vernetzt. Anschließend wurde die Mischung 8d) durch Spincoating aufgetragen und getrocknet, so daß ein vierter ca. 5 µm dicker Film verblieb. Der Film wurde 10 Minuten bei 90°C getempert bis er klar wurde und dann mit UV-A-Licht (ca. 100 mW/cm²) vernetzt. Die Messung der Transmission dieses Polymerfilms aus vier Schichten im UV-VIS - Spektrometer ergab eine nahezu kastenförmige Bande von 450 nm bis 770 nm. Das durch den Film durchgelassene Licht ist linkszirkular polarisiert. Zur Beurteilung der Transmission wurden auf ein handelsübliches Backlight für LCD-Displays der LC-Polymerfilm, eine Verzögerungsfolie mit λ/4-Eigenschaft und ein Linearpolarisator in 45°-Ausrichtung zur Achse der λ/4-Folie gelegt und mit einer Anordnung aus LCD-Backlight mit Linearpolarisator ohne LC-Polymerfilm verglichen. Es wurde gefunden, daß bei senkrechter Blickrichtung die Helligkeit der Anordnung mit LC-Polymerfilm um 35% heller ist als ohne LC-Polymerfilm.

## Patentansprüche

1. Polymerisierbare Mischung (P) enthaltend
A) Monomer oder Oligomer (A), wobei jedes der Monomere oder Oligomere (A) mindestens zwei polymerisierbare funktionelle Gruppen aufweist, die ausgewählt werden aus (Meth-)Acrylatester-, Epoxy- und Vinylethergruppen,
B) flüssigkristallines Monomer oder Oligomer (B), wobei jedes der Monomere oder Oligomere (B) mindestens eine mesogene Gruppe mit aromatischer Doppelringstruktur sowie genau eine polymerisierbare funktionelle Gruppe aufweist, die ausgewählt wird aus (Meth)Acrylatester-, Epoxy- und Vinylethergruppen,
C) 1 bis weniger als 50 Gew.-%, bezogen auf die polymerisierbare Mischung, eines Monomeren (C), das mindestens eine mesogene Gruppe mit aromatischer Doppelringstruktur aufweist und keine Gruppe enthält, die mit den polymerisierbaren funktionellen Gruppen der Monomeren oder Oligomeren (A) und (B) reagieren kann.

2. Mischung nach Anspruch 1, bei der die aromatischen Doppelringstrukturen ausgewählt werden aus je zwei durch eine Einfachbindung verbundenen monocyclischen Gruppen, die ausgewählt werden aus unsubstituierten und substituierten Gruppen 1,4-Phenylen, 2,5-Pyridinylen und 2,5-Pyrenylen und aromatischen Doppelringen, die ausgewählt werden aus unsubstituierten und substituierten Gruppen 2,6-Naphthyliden, 2,7-Naphthyliden und 1,4-Naphthyliden.

3. Mischung nach Anspruch 1 oder 2, bei der die mesogenen Gruppen Carbonsäureester und Alkohole basierend auf Phenyl-, Biphenyl-, Cyanobiphenyl-, Naphtyl- und Cyanonaphtylderivaten sowie Kombinationen aus diesen Gruppen enthalten.

4. Mischung nach Anspruch 1 bis 3, bei der die Monomere oder Oligomere (A) mindestens eine mesogene Gruppe und mindestens zwei polymerisierbare funktionelle Gruppen aufweisen, die ausgewählt werden aus (Meth-) Acrylatester, Epoxy und Vinylether.

5. Mischung nach Anspruch 1 bis 4, welche 5 bis 95 Gew.-% Monomer oder Oligomer (A) enthält.

6. Mischung nach Anspruch 1 bis 5, welche 5 bis 95 Gew.-% flüssigkristallines Monomer oder Oligomer (B) enthält

7. Optisch anisotropes Polymer (F), herstellbar aus den polymerisierbaren Mischungen (P) gemäß Anspruch 1 bis 6.

8. Nematisches Polymer (F) nach Anspruch 7, bei dem die optische Anisotropie Δn größer als 0,18 ist.

9. Cholesterisches Polymer (F) nach Anspruch 7, bei dem die optische Anisotropie Δn größer als 0,16 ist.

10. Verfahren zur Herstellung eines optisch anisotropen Polymers (F) gemäß Anspruch 7, bei dem eine polymerisierbare Mischungen (P) gemäß Anspruch 1 bis 6 auf ein Substrat aufgetragen, orientiert und anschließend durch eine Polymerisation fixiert wird.

## Claims

1. A polymerizable mixture (P) comprising
A) monomer or oligomer (A), each of the monomers or oligomers (A) having at least two polymerizable functional groups which are selected from (meth)acrylate ester, epoxy and vinyl ether groups,
B) liquid crystalline monomer or oligomer (B), each of the monomers or oligomers (B) having at least one mesogenic group having an aromatic double ring structure and exactly one polymerizable functional group, which is selected from (meth)acrylate ester, epoxy and vinyl ether groups,
C) from 1 to less than 50% by weight, based on the polymerizable mixture, of a monomer (C) which has at least one mesogenic group having an aromatic double ring structure and contains no group which can react with the polymerizable functional groups of the monomers or oligomers (A) and (B).

2. Mixture according to Claim 1, in which the aromatic double ring structures are selected from two monocyclic groups each of which are linked by a single bond and are selected from unsubstituted and substituted groups 1,4-phenylene, 2,5-pyridinylene and 2,5-pyrenylene and aromatic double rings which are selected from unsubstituted and substituted groups 2,6-naphthylidene, 2,7-naphthylidene and 1,4-naphthylidene.

3. Mixture according to Claim 1 or 2, in which the mesogenic groups contain carboxylic esters and alcohols based on phenyl, biphenyl, cyanobiphenyl, naphthyl and cyanonaphthyl derivatives and combinations of these groups.

4. Mixture according to any of Claims 1 to 3, in which the monomers or oligomers (A) have at least one mesogenic group and at least two polymerizable functional groups which are selected from (meth)acrylate ester, epoxy and vinyl ether.

5. Mixture according to any of Claims 1 to 4, which contains from 5 to 95% by weight of monomer or oligomer (A).

6. Mixture according to any of Claims 1 to 5, which contains from 5 to 95% by weight of liquid crystalline monomer or oligomer (B).

7. Optically anisotropic polymer (F), which can be prepared from the polymerizable mixtures (P) according to any of Claims 1 to 6.

8. Nematic polymer (F) according to Claim 7, in which the optical anisotropy Δn is greater than 0.18.

9. Cholesteric polymer (F) according to Claim 7, in which the optical anisotropy Δn is greater than 0.16.

10. Process for the preparation of an optically anisotropic polymer (F) according to Claim 7, in which a polymerizable mixture (P) according to any of Claims 1 to 6 is applied to a substrate, oriented and then fixed by a polymerization.

## Revendications

1. Mélange polymérisable (P) qui contient:
A) un monomère ou un oligomère (A), le monomère ou l'oligomère (A) présentant chacun au moins deux groupes fonctionnels polymérisables sélectionnés parmi les groupes esters de (mêth)acrylate, époxys et éthers de vinyle,
B) un monomère de cristal liquide ou un oligomère de cristal liquide (B), le monomère ou l'oligomère (B) présentant chacun au moins un groupe mésogène qui présente une structure aromatique en double cycle et exactement un groupe fonctionnel polymérisable sélectionné parmi les groupes esters de (méth)acrylate, époxys et éthers de vinyle,
C) de 1 à moins de 50% en poids par rapport au mélange polymérisable d'un monomère (C) qui contient au moins un groupe mésogène à structure aromatique en double cycle et qui ne contient pas de groupe qui peut réagir avec les groupes fonctionnels polymérisables des monomères ou oligomères (A) et (B).

2. Mélange selon la revendication 1, dans lequel les structures aromatiques en double cycle sont sélectionnées parmi deux groupes monocycliques liés par une simple liaison et sélectionnés parmi les groupes 1,4-phénylène, 2,5-pyridinylène et 2,5-pyrénylène non substitués ou substitués et les doubles cycles aromatiques qui sont sélectionnés parmi les groupes 2,6-naphtylidène, 2,7-naphtylidène et 1,4-naphtylidène non substitués ou substitués.

3. Mélange selon la revendication 1 ou 2, dans lequel les groupes mésogènes contiennent des esters d'acide carboxylique et des alcools à base de dérivés de phényle, de biphényle, de cyanobiphényle, de naphtyle et de cyanonaphtyle ainsi que de combinaisons de ces groupes.

4. Mélange selon les revendications 1 à 3, dans lequel le monomère ou oligomère (A) présente au moins un groupe mésogène et au moins deux groupes fonctionnels polymérisables sélectionnés parmi les esters de (méth)acrylate, les époxys et les éthers de vinyle.

5. Mélange selon les revendications 1 à 4, qui contient de 5 à 95% en poids de monomère ou d'oligomère (A) .

6. Mélange selon les revendications 1 à 5, qui contient de 5 à 95% en poids de monomère de cristal liquide ou d'oligomère de cristal liquide (B).

7. Polymère optiquement anisotrope (F) que l'on peut obtenir à partir des mélanges polymérisables (P) selon les revendications 1 à 6.

8. Polymère nématique (F) selon la revendication 7, dont l'anisotropie optique Δn est supérieure à 0,18.

9. Polymère cholestérique (F) selon la revendication 7, dont l'anisotropie optique Δn est supérieure à 0,16.

10. Procédé de préparation d'un polymère optiquement anisotrope (F) selon la revendication 7, dans lequel un mélange polymérisable (P) selon les revendications 1 à 6 est apporté sur un substrat, est orienté et est ensuite fixé par polymérisation.
